(19) Europäisches Patentamt
European Patent Office
Office européen des brevets

(11) **EP 3 931 558 B1**

(12) **EUROPÄISCHE PATENTSCHRIFT**

(45) Veröffentlichungstag und Bekanntmachung des Hinweises auf die Patenterteilung:
**27.09.2023  Patentblatt 2023/39**

(21) Anmeldenummer: **20706280.3**

(22) Anmeldetag: **26.02.2020**

(51) Internationale Patentklassifikation (IPC):
**G01N 29/24** *(2006.01)*     **G01N 21/17** *(2006.01)*

(52) Gemeinsame Patentklassifikation (CPC):
**G01N 29/2425; G01N 21/1702; G01N 29/032; G01N 29/348;** G01N 2021/1704; G01N 2021/1708; G01N 2291/021; G01N 2291/02809

(86) Internationale Anmeldenummer:
**PCT/EP2020/054966**

(87) Internationale Veröffentlichungsnummer:
**WO 2020/173974 (03.09.2020 Gazette 2020/36)**

(54) **PHOTOAKUSTISCHES SPEKTROSKOP MIT EINER SCHWINGENDEN STRUKTUR ALS SCHALLDETEKTOR**

PHOTOACOUSTIC SPECTROSCOPE WITH A VIBRATING STRUCTURE AS SOUND DETECTOR

SPECTROSCOPE PHOTOACOUSTIQUE DOTÉ D'UNE STRUCTURE OSCILLANTE EN TANT QUE DÉTECTEUR SONORE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.02.2019  EP 19159297**

(43) Veröffentlichungstag der Anmeldung:
**05.01.2022  Patentblatt 2022/01**

(73) Patentinhaber: **Hahn-Schickard-Gesellschaft für angewandte Forschung e.V.
78052 Villingen-Schwenningen (DE)**

(72) Erfinder:
• **BITTNER, Achim
74080 Heilbronn (DE)**
• **BIESINGER, Daniel
78054 Villingen-Schwenningen (DE)**

(74) Vertreter: **Hertin und Partner Rechts- und Patentanwälte PartG mbB Kurfürstendamm 54/55
10707 Berlin (DE)**

(56) Entgegenhaltungen:
EP-A1- 2 543 987     DE-T2- 69 723 891
US-A1- 2011 072 886     US-A1- 2012 151 994
US-A1- 2017 288 125     US-A1- 2018 136 166
US-A1- 2018 146 512     US-A1- 2019 017 966

**Beschreibung**

Die Erfindung betrifft in einem ersten Aspekt ein photoakustisches Spektroskop zur Analyse von Gas, umfassend einen modulierbaren Infrarot-Emitter, ein mit Gas befüllbares Analysevolumen und einen Schalldruckdetektor Der Schalldruckdetektor umfasst eine schwingfähige Struktur, einen Aktuator und eine Messeinheit, wobei der Aktuator für eine aktive Schwingungsanregung der schwingfähigen Struktur konfiguriert ist und mittels der Messeinheit eine Messung der Schwingungseigenschaften der schwingfähigen Struktur erfolgen kann, welche von der Ausbildung der Schalldruckwellen abhängt.

In einem weiteren Aspekt betrifft die Erfindung ein Verfahren zur Analyse von Gas, umfassend die Bereitstellung eines Photoakustischen Spektroskops zur Analyse von Gas, eine Bestrahlung des Gases mit einer mit einer Modulationsfrequenz modulierten Infrarotstrahlung zur Erzeugung von Schalldruckwellen, eine Anregung der schwingfähigen Struktur mit einer Anregungsfrequenz, eine Messung der Schwingungseigenschaften der schwingfähigen Struktur, welche vom Schalldruck abhängt und eine Bestimmung des Schalldruckes des Gases anhand der gemessenen Schwingungseigenschaften.

Hintergrund und Stand der Technik

Die photoakustische Spektroskopie (PAS) erlaubt die Detektion feinster Konzentrationen von Gasen und hat eine Vielzahl von Anwendungen. Beispielhaft ist die Detektion von $CO_2$, welche in der Forschung und der Klimatechnik eine Rolle spielt. Auch die Konzentration z. B. von Abgasen in der Luft kann so gemessen werden. Ebenso sind militärische Anwendungen relevant, bei denen kleinste Konzentrationen von Giftgas detektiert werden können.

Bei der photoakustischen Spektroskopie wird intensitätsmodulierte Infrarotstrahlung mit Frequenzen im Absorptionsspektrum eines in einem Gas zu detektierenden Moleküls eingesetzt. Ist dieses Molekül im Strahlengang vorhanden, findet eine modulierte Absorption statt, die zu Erwärmungs- und Abkühlungsprozessen führt, deren Zeitskalen die Modulationsfrequenz der Strahlung widerspiegeln. Die Erwärmungs- und Abkühlungsprozesse führen zu Expansionen und Kontraktion des Gases, wodurch Schallwellen mit der Modulationsfrequenz verursacht werden. Diese lassen dann sich durch Schalldetektoren, wie beispielsweise Mikrofone, oder Flusssensoren messen.

Verschiedene Emitter werden als Strahlungsquelle für die genannten Anwendungen verwendet, mit unterschiedlichen Vor- und Nachteilen. Vorzugsweise werden Infrarot (IR) Emitter verwendet. Es können beispielsweise schmalbandige Laserquellen im Infrarotbereich verwendet werden. Diese erlauben die Verwendung hoher Strahlungsintensitäten und können mit Standardkomponenten hochfrequent moduliert werden, z. B.

für die photoakustische Spektroskopie. Jedoch sind durch das schmale Spektrum des Lasers nur vom Absorptionsspektrum her genau passende Moleküle detektierbar. Ebenso sind Laser relativ teuer. Will man verschiedene Moleküle detektieren, muss eine entsprechende Anzahl von Lasern verwendet werden.

Thermische, breitbandige Emitter sind ebenso bekannt. Diese haben den Vorteil eines breiten Spektrums, welches sich durch den Einsatz von (durchstimmbaren) Filtern weiter selektieren lässt, und oft geringer Kosten. Jedoch ist die Modulationsfrequenz dieser Emitter beschränkt, eine direkte Modulation durch Variation der Stromzufuhr ist aufgrund thermischer Zeitkonstanten limitiert und liegt oft im Bereich von einigen Hz bis ca. 100 Hz.

Das Eigenrauschen der Detektionskomponenten bei Mikrofonen ist insbesondere in diesem Bereich von einigen Hz bis ca. 100 Hz sehr hoch und führt zu einem verminderten Signal-zu-Rauschverhältnisses. Das Rauschen der Detektoren kann zusätzlich durch thermische Signale des Emitters verstärkt werden, welches direkt als Rauschen am Detektor registriert werden. Für die Herstellung kompakter, mechanisch-elektronischer Vorrichtungen wird heute auf vielen Anwendungsgebieten auf die Mikrosystemtechnik zurückgegriffen. Die so herstellbaren Mikrosysteme (engl. microelectromechanical system, kurz MEMS) sind sehr kompakt (Mikrometerbereich) bei gleichzeitig hervorragender Funktionalität und immer geringeren Herstellungskosten. Piezoelektrische Cantilever sind auch als MEMS ausgeführt Stand der Technik. Auch dass Drücke mittels piezoelektrische Cantilever gemessen werden können, ist bekannt [1]. Dafür wird z. B. die Dämpfung der resonant betriebenen Cantilever elektrisch gemessen.

Teilweise wird im Stand der Technik zur Verbesserung der Signalqualität eine aktive Anregung von Schallwandlern beschrieben.

Die US 2012/151994 A1 offenbart einen MEMS-basierten photoakustischen Sensor mit einer Laserdiode als IR-Emitter, welcher auf eine mit dem Analysegas gefüllte Resonanzkammer gerichtet ist, deren Schwingungen mittels eines Detektors erfasst werden. Die US 2012/151994 A1 schlägt vor in Nähe (0.1-10 $\mu$m) der Resonanzkammer einen Schallwandler, z.B. ein MEMS-Mikrophon, zu positionieren, welches mittels eines Steuerkreises in einem aktivem Resonanzmodus betrieben wird. Hierbei ist es bevorzugt die Lasermodulation sowie Anregungsfrequenz des Schallwandlers mit der Resonanzfrequenz der Kammer in Einklang zu bringen. Der Detektor, bevorzugt ein *phase locked loop* (PLL)), erfasst eine photoakustische Resonanz als Änderung der Amplitude oder Frequenz des Oszillators aus Steuerkreis und Schallwandler.

Die US 2019/017966 A1 betrifft ein *quartz enhanced photoacoustic spectroscope* (QEPAS) vorzugsweise zum Einsatz in Bohrlöchern umfassend einen tunebaren Laser, welcher in eine mit dem Analysegas gefüllten Probenkammer strahlt. Innerhalb der Probenkammer befindet sich eine *quartz enhanced tuning fork* (QTF) mit derer die entstehenden Schallwellen detektiert werden können. In einer Ausführungsform wird die Stimmgabel (QTF) aktiv mit einem periodischen Signal betrieben, um das Signal-Rausch-Verhältnis zu erhöhen. Hierzu wird die Modulationsfrequenz des Lasers auf die Resonanzfrequenz der Stimmgabel (QTF) oder deren subharmonische Frequenzen abgestimmt.

Die US 2011/072886 A1 offenbart ein photoakustisches Spektroskop mit einem Resonator in einer Analysekammer, auf welche ein Laser strahlt. Die entstehenden Schallwellen, werden mit einer Stimmgabel gemessen, welche teilweise in die innere Kavität des Resonators ragt. Die Stimmgabel umfasst bevorzugt piezoelektrische Materialien und hohe Resonanzfrequenzen im Kilohertzbereich. Für eine erhöhte Sensitivität ist es bevorzugt die Eigenfrequenz des Resonators und Frequenz der Lasermodulation hierauf abzustimmen.

EP 2 543 987 A1 schlägt einen MEMS basierten photoakustischen Sensor vor, welcher auf einem SOI Wafer geformt wird und einen schwingfähigen Resonator umfasst. Mittels einer optischen Faser kann Laserlicht in die Kavität des Sensors geleitet werden, um ein darin befindliches Gas anzuregen. Die Frequenz des Laserlichtes wird an die Resonanzfrequenz des Resonators angepasst. Bevorzugt ist der Resonator ein piezoelektrischer Balken dessen Schwingung durch piezoelektrische *sensing stripes* erfasst werden.

Bei den vorgenannten Systemen kommen mithin schwingungsfähige Schallwandler mit Resonanzfrequenzen im Kilohertzbereich zum Einsatz, wobei zur Erhöhung der Sensitivität eine Abstimmung der Modulation der IR-Emitters an die Resonanzfrequenzen erfolgt. Als IR-Emitter werden daher bevorzugt Laser oder Laserdioden mit hoher Modulationsfähigkeit im Kilohertzbereich verwandt. Durch die Verwendung von hochfrequent modulierten IR-Emittern und ggf. aktiv angeregten Schallwandlern mit hohen Resonanzfrequenzen, soll der Einfluss von Störsignalen und Rauschen im Niederfrequenzbereich minimiert werden.

Eine Verwendung von hochfrequenten im kHz-Bereich angeregten schwingfähigen Strukturen, beispielsweise von Cantilevern, als Detektoren in PAS-Sensoren bei gleichzeitiger Verwendung von IR-Emitter mit langsamer Modulationsfähigkeit, wie beispielsweise thermischen IR-Emittern, ist bislang nicht bekannt.

## Aufgabe der Erfindung

Aufgabe der Erfindung ist es, ein photoakustisches Spektroskop sowie ein Verfahren zur Gasanalyse ohne die Nachteile des Standes bereitzustellen. Insbesondere war es eine Aufgabe der Erfindung, ein verbessertes photoakustisches Spektroskop zur Verfügung zu stellen, welches eine verbesserte Genauigkeit und Toleranz gegenüber Rauschen und die Möglichkeit zur Messung weiterer Messgrößen aufweist und sich gleichzeitig durch einen einfachen, kostengünstigen und kompakten Aufbau auszeichnet.

## Zusammenfassung der Erfindung

Die Aufgabe wird durch die Merkmale der unabhängigen Ansprüche gelöst. Bevorzugte Ausführungsformen der Erfindung sind in den abhängigen Ansprüchen beschrieben.

In einem ersten Aspekt betrifft die Erfindung ein photoakustisches Spektroskop zur Analyse von Gas, umfassend

- einen modulierbaren Infrarot-Emitter,

- ein mit Gas befüllbares Analysevolumen und

- einen Schalldruckdetektor,

wobei der Infrarot-Emitter, das Analysevolumen und der Schalldetektor derart angeordnet vorliegen, dass die von dem Infrarot-Emitter modulierbar emittierbare Infrarotstrahlung Gas im Analysevolumen zur Ausbildung von Schalldruckwellen anregen kann, welche mit Hilfe des Schalldruckdetektors messbar sind, wobei der Schalldruckdetektor eine schwingfähige Struktur, einen Aktuator und eine Messeinheit umfasst, wobei der Aktuator konfiguriert ist für eine aktive Schwingungsanregung der schwingfähigen Struktur und die Messeinheit konfiguriert ist zur Messung der Schwingungseigenschaften der schwingfähigen Struktur, welche von der Ausbildung der Schalldruckwellen abhängt. Bevorzugt beträgt die Modulationsfrequenz des Infrarotemitters zwischen 1 Hz und 200 Hz, während die Anregungsfrequenz der schwingfähigen Struktur zwischen 1 kHz und 200 kHz beträgt.

Das erfindungsgemäße photoakustische Spektroskop zeichnet sich dadurch aus, dass der Schalldruckdetektor aktiv zum Schwingen angeregt wird und bei einer deutlich höheren Frequenz schwingt als die zu messenden Schalldruckwellen des zu analysierenden Gases, wobei die Messung der Schwingungseigenschaften ebenfalls im Bereich dieser höheren Frequenz stattfindet. Der Schalldruckdetektor steht dabei mit dem Gas in Verbindung und wird in seinen Schwingungseigenschaften, z. B. der Schwingungsamplitude, der Schwingungsfrequenz und/oder der Phase der Schwingung im Vergleich zu der periodischen Anregung durch die einwirkenden Schalldruckwellen des Gases beeinflusst. Diese Beeinflussung ist z. B. auf eine geänderte Dämpfung der zur Schwingung angeregten Struktur durch sich ändernde Druckverhältnisse im Gas aufgrund der Schalldruckwellen zurückzuführen, welche direkt mit der Struktur wechselwirken. Besonders gut lässt sich diese Beeinflussung im Bereich der Resonanzfrequenz der schwingenden Struktur messen, weshalb diese vorzugsweise resonant oder nahezu resonant angeregt wird.

Dadurch, dass die Messung der Schwingungseigenschaften und somit bevorzugt der Dämpfung in einem deutlich höheren Frequenzband stattfindet als der bevorzugte Frequenzbereich der Schalldruckwellen, kann gegenüber klassischen Messmethoden, z. B. durch Verwendung eines Mikrofons, Rauschen besser unterdrückt werden, da dieses Rauschen vorzugsweise einen ähnlichen Frequenzbereich wie die Schallwellen selber hat. Außerdem können Messtechniken verwendet werden, die eine schmalbandige Filterung des Messsignals erlauben und daher ebenfalls das Rauschen unterdrücken können. Dies gilt insbesondere für thermisches Rauschen. Ein weiterer Vorteil des Spektroskops und des Schalldruckdetektors ist die Messbarkeit des Druckes an sich in einem zeitlichen Verlauf und nicht nur die Druckantwort des durch modulierte IR-Strahlung angeregten Gases wie im Stand der Technik. So können zusätzliche Informationen über das analysierte Gas gewonnen werden, z. B. über dessen Relaxationsverhalten nach einer akustischen Schwingungsanregung.

Ein photoakustisches Spektroskop zur Analyse von Gas ist dem Fachmann dabei in seinen Grundzügen bzw. wesentlichen Komponenten bekannt. Ein modulierbarer Emitter elektromagnetischer Strahlung im infraroten Wellenlängenbereich ist dabei bevorzugt so angeordnet und konfiguriert, dass von dem Infrarot-Emitter emittierte Infrarotstrahlung im Wesentlichen oder zumindest teilweise auf das zu analysierende Gas im Analysevolumen trifft. Erfolgt die modulierte Bestrahlung mit einer Infrarotwellenlänge, welche dem Absorptionsspektrum eines in dem Gas befindlichen Moleküls entspricht, findet eine modulierte Absorption statt, die zu Erwärmungs- und Abkühlungsprozessen führt, deren Zeitskalen die Modulationsfrequenz der Strahlung widerspiegeln. Gemäß dem photoakustischen Effekt führen die Erwärmungs- und Abkühlungsprozesse zu Expansionen und Kontraktion des Gases, wodurch das Gas zur Ausbildung von Schalldruckwellen mit im Wesentlichen der Modulationsfrequenz angeregt werden kann. Diese lassen sich durch den Schalldetektor messen. Die Leistung der Schallwellen ist dabei vorzugsweise direkt proportional zur Konzentration des absorbierenden Gases.

Die Schallwellen werden in der PAS des Standes der Technik mit Mikrofonen oder sonstigen passiv durch die Schallwellen in Schwingung versetzbare Strukturen, z. B. Membranen, gemessen. Diese Art der Schalldetektoren schwingen also im Wesentlichen mit der Frequenz des erzeugten Schalls. Der hier verwendete Schalldruckdetektor ist ebenfalls eine schwingfähige Struktur, welche jedoch von einem Aktuator durch bevorzugt periodische Anregung aktiv in Schwingung versetzt wird. Dabei liegt die Schwingungsfrequenz vorzugsweise deutlich oberhalb der Frequenz der zu messenden Schallwellen und entspricht vorzugsweise im Wesentlichen der Anregungsfrequenz. Insbesondere wird die Struktur im Bereich ihrer Resonanzfrequenz angeregt, wobei die Struktur vorzugsweise durch Materialauswahl, Abmessungen, Aufhängung und/oder Art der Schwingungsanregung eine geeignete Resonanzfrequenz aufweist. Einem durchschnittlichen Fachmann sind die Wechselwirkungen vorstehend genannter und anderer Eigenschaften der Struktur auf dessen Resonanzfrequenz bekannt bzw. er kann diese berechnen, z. B. durch Simulationen wie Finite Elemente Methoden (FEM).

Die Messeinheit misst bevorzugt die Schwingungseigenschaften, der in Schwingung versetzten Struktur, z. B die Schwingungsamplitude, Schwingungsfrequenz und/oder die Phase im Vergleich zur der Anregung der schwingfähigen Struktur, vorzugsweise im zeitlichen Verlauf, z. B. durch eine Impedanzmessung, wenn die Struktur ein Material umfasst, dessen Impedanz eine Abhängigkeit mit einen oder mehreren der vorgenannten Schwingungseigenschaften aufweist. Die Struktur steht dabei bevorzugt in direkter Wechselwirkung mit einem zu analysierenden Gas. Wird das Gas nun aufgrund seiner bevorzugt durch die Zusammensetzung beeinflussten Absorptionseigenschaften durch die modulierte Infrarotstrahlung zu Schwingungen angeregt, wechselwirken die erzeugten Schalldruckwellen mit der schwingfähigen Struktur, wodurch die Schwingungseigenschaften, vorzugsweise dessen Amplitude, Frequenz und/oder Phase gegenüber der Anregung, beeinflusst werden (z. B. über die Dämpfung).

Das zu analysierende Gas befindet sich dabei in einem mit Gas befüllbaren Analysevolumen. Dieses ist bevorzugt ein nach außen zumindest bereichsweise abgeschlossenes oder abschließbares Volumen, in dem sich das Gas befindet bzw. eingeleitet werden kann, z. B. durch eine verschließbare Öffnung in Form eines Verschlusses und/oder Ventils und/oder durch eine Zuleitung. Insbesondere handelt es sich um ein komplett abgeschlossenes oder abschließbares Volumen, welches zumindest eine, vorzugsweise zwei verschließbare Öffnung zur Einleitung und/oder Ausleitung des zu analysierenden Gases aufweist. So kann das zu analysierende Gas sehr gut lokalisiert werden, insbesondere in einem Strahlbereich der Infrarotstrahlung.

Des Weiteren kann durch ein abgeschlossenes Volumen die genaue Zusammensetzung und/oder Konzentration des Gases bewahrt und eine Mischung mit einem das Volumen umgebenden Gas vermindert werden. Auch bieten abgeschlossene Volumina den Vorteil, besser gegenüber störenden Schallquellen von außerhalb abgesichert zu sein und so eine fehlerverminderte Messung zu ermöglichen. Abgeschlossenes Volumen bedeutet dabei bevorzugt ein Volumen, dessen Inhalt sich im Wesentlichen nicht mit einem Gas eines anderen Volumens außerhalb des Analysevolumens mischen kann. Abgeschlossen kann sich vorzugsweise ebenso auf genau kontrollierbare Temperaturen und/oder Drücke innerhalb des Volumens beziehen, welche darüber hinaus insbesondere von Temperaturen und/oder Drücken außerhalb des Analysevolumens im Wesentlichen unabhängig sind.

Ein weiterer Vorteil eines abgeschlossenen oder zumindest bereichsweise abgeschlossenen Volumens ist, dass dieses für die Erzeugung und Detektion der Schallwellen besonders gut ausgelegt werden kann. Z. B. kann das Volumen so aufgebaut sein, dass eine akustische Resonanz im Bereich der Modulationsfrequenz und somit eine mögliche Ausbildung von Schalldruckwellen unterstützt wird, vorzugsweise durch ein Volumen in Form eines Resonators. Ebenso kann die räumliche Anordnung von Volumen und Detektor zueinander so ausgebildet sein, dass der Detektor im Verhältnis zu erzeugbaren Schallwellen des Gases im Volumen besonders günstig angeordnet ist, z. B. indem Detektor und Schallwellen bspw. eine möglichst große gemeinsame Projektionsfläche aufweisen und/oder der Detektor nah an einem bevorzugten Ursprungsbereich von durch modulierte Infrarotstrahlung erzeugbare Schallwellen angeordnet ist.

Das Analysevolumen kann vorzugsweise ebenso zumindest teilweise geöffnet sein. Dadurch kann insbesondere eine das Spektroskop umgebende Gasatmosphäre, gegenüber dem das Analysevolumen zumindest teilweise geöffnet ist, vermessen und auf ihre Zusammensetzung überprüft werden. Dies ist insbesondere interessant für Anwendungen im Bereich der Schadstoffmessung, aber auch z. B. für militärische Anwendungen oder zur Terrorabwehr, z. B. durch einen Giftgasangriff. Vorteilhaft ist jedoch auch in diesem Fall, dass das Analysevolumen wohl definiert ist, so dass Infrarot-Emitter, das Analysevolumen und der Schalldetektor dass derart angeordnet vorliegen, dass die von dem Infrarot-Emitter modulierbar emittierbare Infrarotstrahlung Gas im Analysevolumen zur Ausbildung von Schalldruckwellen anregen kann, welche mit Hilfe des Schalldruckdetektors messbar sind.

Die Infrarot-Strahlung durch den Infrarot-Emitter wird bevorzugt von außen auf einen Vorzugsbereich des Analysevolumens ausgerichtet. Muss dabei durch eine Außenwand des Volumens hindurch gestrahlt werden, um ein Gas im Inneren anzuregen, kann diese Wand bevorzugt zumindest in diesem Bereich für die IR-Strahlung im Wesentlichen transparent sein.

Begriffe wie im Wesentlichen, ungefähr, etwa, ca. etc. beschreiben bevorzugt einen Toleranzbereich von weniger als ± 40%, bevorzugt weniger als ± 20%, besonders bevorzugt weniger als ± 10 %, noch stärker bevorzugt weniger als ± 5% und insbesondere weniger als ± 1%. Ähnlich beschreibt bevorzugt Größen die ungefähr gleich sind. Teilweise beschreibt bevorzugt zu mindestens 5 %, besonders bevorzugt zu mindestens 10 %, und insbesondere zu mindestens 20 %, in einigen Fällen zu mindestens 40 %. Wird vorstehend z. B. beschrieben, dass ein Bereich für einen Infrarotstrahl im Wesentlichen transparent ist, so ist damit gemeint, dass die gesamte Intensität eines Strahls oder Teilstrahls innerhalb der oben genannten Toleranzbereiche durch diesen Bereich durchgelassen wird.

Das Analysevolumen ist bevorzugt mit Gas befüllbar. Das bedeutet, dass auch bei einem zumindest teilweise abgeschlossenen bzw. verschließbaren Volumen eine vorzugsweise verschließbare Öffnung zur Befüllung vorliegt. Vorzugsweise kann auch ein Gasfluss realisiert werden, indem das Analysevolumen z. B. einen Zulauf und einen Ablauf besitzt. Somit kann entweder ein kontinuierlicher Gasfluss in das Volumen realisiert werden oder ein diskontinuierlicher Gasfluss, bei dem z. B. während einer Befüllungs- bzw. Gasaustauschphase eine Befüllung bzw. ein Austausch des Gases im Analysevolumen vorgenommen werden kann. In einer Analysephase wird der Gasfluss vorzugsweise unterbrochen, damit die PAS stattfinden kann. Sollen zu verschiedenen Zeitpunkten verschiedene Gase analysiert werden, kann dies vorzugsweise durch einen solchen Aufbau realisiert werden. Zwischen zwei zu analysierenden Gasen kann vorzugsweise ein Reinigungsgas zur Reinigung des Volumens von etwaigen Gasrückständen zugeführt werden.

Bei einem Analysevolumen, welches zumindest teilweise geöffnet ist und somit vorzugsweise einen permanenten Gasaustausch mit einer Umgebung zulässt, findet eine Befüllung des Analysevolumens durch Wechselwirkung mit einer Gasatmosphäre der Umgebung statt.

Ein Analysevolumen kann vorzugsweise eine Probekammer und eine Referenzkammer umfassen, welche durch einen Verbindungskanal verbunden bzw. verbindbar sind.

Ein modulierbarer Infrarot-Emitter bezeichnet bevorzugt eine Vorrichtung, die elektromagnetische Strahlung aussendet. Diese Strahlung hat bevorzugt einen Wellenlängenbereich im Infrarot (IR) Bereich, insbesondere zwischen ca. 700 Nanometer (nm) und 1 Millimeter (mm) Wellenlänge. Die dementsprechende Frequenz der emittierten Strahlung kann im Bereich zwischen etwa 300 Gigahertz (GHz) bis 400 Terrahertz (THz) liegen. Das Spektrum kann ebenso bevorzugt anhand der Wellenzahl $m^{-1}$ bzw. $cm^{-1}$ wiedergegeben werden, wie es im Bereich der Spektroskopie üblich ist. Ein Fachmann weiß, wie die Umrechnung zwischen diesen Einheiten vorgenommen wird.

Das Spektrum ist insbesondere so gewählt, dass es dem bevorzugten Anwendungsgebiet des Emitters, nämlich der Infrarotspektroskopie und insbesondere der photoakustischen Spektroskopie entspricht. Dabei ist insbesondere die Schwingungsanregung der zu spektroskopierenden und/oder zu detektierenden Gasmoleküle bevorzugt, welche je nach Gasmolekülen einem bevorzugten spektralen Bereich entsprechen. Beispielsweise ist für die Anregung von $CO_2$ Molekülen ein Spektralbereich von etwa 2,4 Mikrometern ($\mu$m) geeignet. Besonders bevorzugte Wellenlängenbereich der Infrarotstrahlung sind 700 nm bis 10 $\mu$m, bevorzugt 1 bis 10 $\mu$m, besonders bevorzugt 2 $\mu$m bis 10 $\mu$m.

Zur Erzeugung der Infrarotstrahlung ist bevorzugt die Bereitstellung thermischer Energie in Form eines Heizelements vorgesehen. Besonders bevorzugt ist ein (Mikro-) Heizelement. Unter einem Mikro-Heizelement wird bevorzugt ein Heizelement mit Abmessungen der Größenordnung Mikrometer ($\mu$m) verstanden. Dabei

umfasst das Heizelement eine erhitzbare Schicht aus einem leitfähigen Material, welches bei Durchfluss eines elektrischen Stroms joulesche Wärme produziert. Die produzierte Wärme zeigt bevorzugt eine Abhängigkeit vom ohmschen Widerstand des Elements und vom Quadrat der Stromstärke bzw. vom Quadrat der angelegten Spannung und dem inversen ohmschen Widerstand, je nachdem, ob eine Strom- oder eine Spannungsquelle verwendet wird. Eine thermische Quelle infraroter Strahlung hat für die PAS vorteilhafte Eigenschaften, wie z. B. eine breitbandige Emission, durch die eine Vielzahl verschiedenster Gasatome bzw. -moleküle mit nur einer Lichtquelle angeregt werden können. Gleichzeitig ist ein thermischer IR-Emitter besonders kostengünstig, einfach herzustellen und langlebig.

In einem Gleichgewichtszustand ist die produzierte Wärme gleich zu den Wärmeverlusten durch Wärmeleitung, Konvektion und Wärmestrahlung (synonym: thermische Strahlung, Infrarotstrahlung), welche an den äußeren Grenzflächen der stromdurchflossenen erhitzbaren Schicht abgegeben wird. Wie dem Fachmann bekannt ist, verursacht die produzierte Wärme unter anderem thermische Strahlung, insbesondere durch thermische Bewegung von Teilchen, welche z. B. eine Beschleunigung von Ladungsträgern und/oder oszillierende Dipolmomente zur Folge hat. Somit kann durch eine stromdurchflossene erhitzbare Schicht gezielt Infrarotstrahlung erzeugt werden. Die erhitzbare Schicht ist bevorzugt aus Metall, beispielsweise aus Wolfram oder aus Platin. Durch Anlegen einer geeigneten Spannung und den daraus resultierenden Stromfluss wird joulesche Wärme und somit letztendlich Infrarotstrahlung erzeugt.

Das Strahlungsspektrum eines erhitzen Körpers lässt sich dabei bevorzugt angenähert durch das Planck'sche Strahlungsgesetz beschreiben, wobei dem Fachmann die Unterschiede einer realen erhitzbaren Schicht zu einem schwarzen Körper bekannt sind, beispielsweise der Emissionsgrad oder die reale Abweichung von einem thermischen Gleichgewicht des Körpers. Trotz dieser Abweichungen werden das erzeugte Spektrum und dessen Intensität im Wesentlichen von der Temperatur und der abstrahlenden Fläche gemäß dem Planck'schen Strahlungsgesetz beschrieben.

Somit kann ein Fachmann durch gezieltes Design des (Mikro-) Heizelements ein bevorzugtes Spektrum mit einer bevorzugten Intensitätsverteilung erzielen. Hierzu sind neben dem Material und der geometrischen Ausgestaltung des Heizelements bevorzugt die zur Verfügung gestellte elektrische Energie, sowie die Größe der Wärmeverluste des Heizelements neben der Wärmestrahlung maßgeblich. Die Größe dieser Wärmeverluste wird beispielsweise bestimmt durch die Wärmeleitfähigkeit zwischen dem Heizelement und den angrenzenden Materialien und/oder Fluiden sowie deren Wärmekapazität und der Größe der Grenzfläche(n).

Ein IR- Emitter in Form eines Heizelements ist besonders kostengünstig und robust, gleichzeitig lässt sich aufgrund der spektralen Breite der Emission eine Vielzahl von Gasmolekülen bei der PSA detektieren. Durch einen vorzugsweise durchstimmbaren Bandpass-Filter lassen sich bevorzugt bei Bedarf schmalere Spektren aus dem breiten Emissionsspektrum selektieren.

Die Infrarotstrahlung kann vorzugsweise ebenso durch eine im gewünschten infraroten Spektralbereich emittierende Leuchtdiode (LED) und/oder einen Laser erzeugt werden. Insbesondere ein Laser weist vorzugsweise ein schmales Emissionsspektrum auf, so dass bevorzugt nur genau auf dieses Spektrum passende Absorptionslinien von Gasatomen bzw. - molekülen angeregt und somit detektiert werden können. Daher ist ein Laser vorteilhaft, wenn nur bestimmte Gasmoleküle detektiert werden sollen, wobei die Aussagekraft der Detektion bezüglich des Vorhandenseins dieser Moleküle besonders hoch ist, da andere Moleküle bevorzugt mit hoher Sicherheit durch das schmale Spektrum des Lasers nicht angeregt werden können.

Die Emission des IR-Emitters erfolgt bevorzugt als Strahl, welcher in einer bevorzugten Richtung in Form einer Grade orientiert ist. Der Begriff Strahl soll im weiteren Verlauf den vorzugsweise gebündelten Teil der Strahlung entlang der bevorzugten Strahlrichtung des Emitters beschreiben, welcher vom Emitter ausgesandt wird, wobei insbesondere die Bereiche der größten Intensität entlang dieser Richtung den Strahl definieren. Intensität ist bevorzugt definiert als Flächenleistungsdichte und hat bevorzugt die Einheit Watt pro Quadratmeter oder abgekürzt $W/m^2$.

Es können zusätzliche Komponenten wie z. B. Linsen im Emitter integriert oder extern angebracht sein, die für eine Bündelung bzw. Kollimation des Strahls sorgen. Ein Fachmann weiß, wie er durch das Design des IR-Emitters sowie durch Verwendung weiterer Komponenten das Emissionsprofil der Strahlungsquelle so formt, dass ein gewünschtes Strahlprofil sowie eine gewünschte Strahlrichtung resultieren. Dabei kann der modulierbare IR-Emitter bevorzugt ohne zusätzliche Linsen auskommen, oder als ein System umfassend Strahlungsquelle und mindestens einer Linse zur Kollimation des Strahls vorliegen.

Der Emitter ist modulierbar, das bedeutet, dass die Intensität der emittierten Strahlung, bevorzugt die Intensität des Strahls im zeitlichen Verlauf kontrollierbar geändert werden kann. Die Modulation soll bevorzugt eine zeitliche Änderung der Intensität als messbare Größe hervorrufen. Das bedeutet z. B., dass die Intensität im zeitlichen Verlauf zwischen der innerhalb des Messzeitraums gemessenen schwächsten Intensität und der innerhalb desselben Zeitraums gemessenen stärksten Intensität ein Unterschied besteht, der größer ist als die Sensibilität eines für das Strahlungsspektrum und die Anwendung typischerweise verwendeten Geräts zur Messung oder Bestimmung der Intensität. Bevorzugt ist der Unterschied deutlich größer als ein Faktor 2, mehr bevorzugt 4, 6 oder 8 zwischen der stärksten und der schwächsten einstellbaren Intensität. Besonders bevorzugt erfolgt die Modulation der Intensität des modulierten Strahles für eine oder mehrere vorbestimmte Resonanzwellenlängen.

Vorzugsweise kann, insbesondere bei einem thermischen Emitter, eine direkte Modulation durch Variation der Stromzufuhr vorgenommen werden. Diese ist ebenfalls besonders einfach und kostengünstig zu realisieren.

Bei bekannten photoakustischen Spektroskopen besteht ein Nachteil der Verwendung von IR-Emittern mit Heizelementen in deren langsamer Modulationsfähigkeit. Denn eine solche Modulation ist aufgrund thermischer Zeitkonstanten meistens auf einen bestimmten Bereich eines Modulationsspektrums limitiert, z. B. im Bereich einer Größenordnung von bis zu 100 Hz. Eine langsame Modulation war im Stand der Technik oft mit einem schlechten Signal-zu-Rauschverhältnis zur aufgrund des Eigenrauschens der Detektionskomponenten behaftet. Bei der vorliegenden Erfindung kann dieser Nachteil beseitigt werden, weil der Schalldruckdetektor eine schwingfähige Struktur darstellt, welche mit Hilfe eines Aktuators aktiv zu Schwingungen bei bevorzugt deutlich höheren Frequenzen angeregt wird. Die eigentliche Detektion der Schalldruckwellen für die PAS rührt dabei aus einer Modulation dieser Schwingung aufgrund der Beeinflussung der Schwingungseigenschaften der Struktur, bspw. der Dämpfung, durch die Schalldruckwellen. Obwohl die Schalldruckwellen also selber aufgrund der Modulationsfrequenz des IR-Emitters ebenfalls eine niedrige Frequenz aufweisen, findet die eigentliche Detektion der Schwingungseigenschaften der Struktur, welche eben von den Schalldruckwellen beeinflusst wird, bei den höheren Schwingfrequenzen der Struktur und damit im Wesentlichen außerhalb des Frequenzbereichs eines typischen Detektoreigenrauschens statt.

Vorteilhaft kann durch die erfindungsgemäß vorgesehene aktive Anregung der schwingfähigen Struktur somit ein deutlich verbessertes Signal-zu-Rausch Verhältnis auch bei Verwendung von langsam modulierbaren IR-Emittern erreicht werden. Dies erlaubt die Bereitstellung kostengünstiger, kompakter PAS auf MEMS-Basis mit ausgezeichnete Detektionsqualität.

Eine Modulation des Infrarot-Emitters kann vorzugsweise ebenso durch eine externe Modulation erfolgen, z. B. durch die Verwendung eines sich drehend Chopperrads und/oder eines Elektrooptischen Modulators. Auch hier muss vorteilhaft keine hochfrequente Modulation im Kilohertzbereich erfolgen, um ein gutes Signal-zu-Rausch Verhältnis zu gewährleisten.

Der Schalldruckdetektor umfasst eine schwingfähige Struktur, z. B. eine schwingfähige und/oder schwingend gelagerte Membran, ein schwingfähiges und/oder schwingend gelagertes Ventil und/oder einen schwingend gelagerten Cantilever bzw. Biegebalken. Schwingfähig bedeutet dabei insbesondere, dass die Struktur durch einen geeigneten Antrieb in Form eines Aktuators zu einer mechanischen Schwingung über längere Zeit angeregt werden kann, ohne dass es zu strukturellen Veränderungen (Beschädigungen) der Struktur kommt.

Die Schwingung kann eine einfache Schwingung im Wesentlichen entlang einer Raumdimension und/oder um eine eindimensionale Achse herum umfassen, es kann sich jedoch auch um eine komplexere, räumlich mehrdimensionale Schwingung bzw. Schwingungsmode handeln. Gleichzeitig sollen die Schwingungen vorzugsweise groß genug sein, dass sie bzw. ihre Eigenschaften von einer Messeinheit gemessen werden können. Das bedeutet insbesondere, dass aus der Messung der Schwingung ein messbares und elektronisch verarbeitbares elektrisches Signal generiert werden kann, welches vorteilhafterweise Informationen über die Schwingung und deren Eigenschaften enthalten kann, wie z. B. Schwingungsamplitude, Schwingungsfrequenz, Phase der Schwingung bevorzugt gegenüber einem Referenzsignal und/oder Schwingungsintensität.

Die Frequenz der Schwingung liegt dabei vorzugsweise wohldefiniert in einem Bereich zwischen 1 Hz und 100 kHz, insbesondere hat die Schwingung eine Frequenz, welche sich deutlich von anderen möglicherweise im Spektroskop vorkommender Frequenzen anderer wesentlicher Prozesse unterscheidet, z. B. von bekannten (thermischen) Rauschprozessen und/oder Modulationsfrequenzen der IR-Strahlung. Insbesondere liegt die Schwingungsfrequenz deutlich höher als diese Frequenzen. Bevorzugt hat die Schwingung eine im Wesentlichen konstante Schwingungsfrequenz oder ein schmales Schwingungsspektrum.

Als Schwingung wird bevorzugt eine wiederholte zeitliche Schwankung von der räumlichen Auslenkung der Struktur bzw. von Bereichen der Struktur verstanden. Insbesondere ist die Schwingung im Wesentlichen oder zumindest teilweise periodisch, das bedeutet vor allem zeitlich regelmäßig.

Periodische Schwingungen, insbesondere über mehrere Perioden hinweg betrachtet, können vorzugsweise durch die Schwingungsmode der Schwingung beschrieben werden. Die Schwingungsmode ist vorzugsweise eine Form der Beschreibung bestimmter zeitlich stationärer Eigenschaften einer Schwingung. Verschiedene Schwingungsmoden unterscheiden sich insbesondere in der räumlichen Verteilung der Schwingungsintensität, wobei die Form der Schwingungsmoden vorzugsweise durch Randbedingungen bestimmt wird, unter denen sich die Schwingung ausbreitet. Diese Randbedingungen können z. B. durch das Material, die Abmessungen und/oder die Lagerung der schwingfähigen Struktur sowie mindestens eines auf die Struktur einwirkenden Kraftvektors (umfassend bevorzugt die nominale Größe und/oder die Richtung der einwirkenden Kraft) gegeben sein.

Bei einem schwingenden Cantilever kann es z. B. mehrere Biegeschwingungsmoden geben, bei der sich der Cantilever entlang einer Vorzugsrichtung, z. B. senkrecht zu einer Ebene der Aufhängung des Cantilevers durchbiegt, die sich in insbesondere in der Schwingungsfrequenz, der maximalen Schwingungsamplitude sowie in dessen räumlichem Auftreten unterscheiden können. Eine Biegeschwingungsmode ist dabei insbesondere dadurch gekennzeichnet, dass die Schwingung einen dynamischen Biegeprozess in Richtung im Wesentlichen einer Normalen zu einer Hauptebene des Cantilevers bzw. der schwingungsfähigen Struktur, beschreibt. Es kann jedoch auch andere Schwingungsmodi geben, z. B. eine Torsionsmode, welche eine Schwingung in Form einer periodischen Verdrehungsbewegung der Struktur entlang einer Achse beschreibt. Auch komplexere Moden und/oder Moden, welche Überlagerungen anderer Moden darstellen, sind möglich. Bevorzugt findet eine Schwingung in einer Schwingungsmode statt. Ein Beispiel für eine komplexe Schwingungsmode ist die dachziegelartige (engl.: *roof tile-shaped*) Vibrations-Schwingungsmode, z. B. eines Cantilevers, bei welcher der Cantilever zwischen dachziegelartigen Verformungszuständen hin- und herschwingt.

Dabei muss neben der Struktur auch der Aktuator zur Anregung solcher Schwingungen geeignet sein, da er für eine aktive Schwingungsanregung der Struktur konfiguriert ist. Der Aktuator soll die schwingungsfähige vorzugsweise zu einer erzwungenen Schwingung anregen. Der Aktuator muss geeignet sein, eine von ihm generierte Kraft auf die Struktur zu übertragen, z. B. in dem er mit der Struktur in einer Art in Verbindung steht, welche eine Kraftübertragung ermöglicht. Vorzugsweise kann die Struktur auch den Aktuator zumindest teilweise umfassen. Dabei muss die Kraft selber geeignet sein, die Schwingungen auszulösen, dass bedeutet insbesondere, dass die Kraft periodisch ist und vorzugsweise im Wesentlichen die Frequenz der zu erzeugenden Schwingungen der Struktur aufweist und geeignet ist, die Struktur in Schwingungen vorzugsweise in einer Schwingungsmode zu versetzen.

Einem Fachmann sind die teils komplexen Wechselwirkungen bekannt zwischen einer schwingungsfähigen Struktur und einem Antrieb der erzwungen Schwingung, welche vorzugsweise u. a. durch Resonanzfrequenzen (oder Eigenfrequenzen) der Struktur, Dämpfungseigenschaften der Struktur und des Fluides (Gases) in dessen Umgebung und Größe und Richtung der einwirkenden Antriebskraft im zeitlichen Verlauf resultiert und örtlich unterschiedlich innerhalb der Struktur ausgeprägt sein kann. So kann eine einfach zu beschreibende, periodische Krafteinwirkung entlang einer Richtung auch wesentlich komplexere Schwingungsmuster erzeugen, als sie ohne Berücksichtigung dieser Wechselwirkungen zu erwarten wären.

Es kann dabei bevorzugt sein, dass die Struktur elastische Eigenschaften aufweist, welche Schwingungen insbesondere entlang mindestens einer Richtung und/oder an mindestens einem Ort bzw. Bereich der Struktur unterstützen. Vorzugsweise lassen sich diese elastischen Eigenschaften durch mindestens eine Federkonstante beschreiben. Vorzugsweise weist die Struktur ebenfalls eine Masse auf, welche die Schwingungseigenschaften mitbestimmt. Es kann dabei bspw. sein, dass der Aktuator nur eine periodische, aktive Kraft für eine Auslenkung in eine Richtung erzeugt und die Struktur aufgrund Ihrer Rückstellkraft die Auslenkung in die entgegengesetzte hervorruft, woraus insgesamt die Schwingung entsteht. Bevorzugt setzt ein Aktuator insbesondere ein elektrisches Steuerungssignal in eine Bewegung um. Ein Aktuator kann z. B. ein piezoelektrischer Aktuator sein und eine periodische Kraft zur Schwingungsanregung aufgrund des piezoelektrischen Effekts erzeugen, wenn z. B. ein elektrisches Steuersignal in Form einer elektrischen Spannung mit periodischem Zeitverlauf an den Aktuator angelegt wird. Dabei kann der Aktuator vorzugsweise ein externes Element sein, welcher eine Anregungskraft mechanisch an die Struktur überträgt, der Aktuator kann jedoch ebenso auch von der Struktur umfasst sein und z. B. innerhalb dieser die Kraft zur mechanischen Schwingungsanregung erzeugen.

Die Messeinheit ist bevorzugt geeignet zur Messung der Schwingungseigenschaften und insbesondere zur Messung eines zeitlichen Verlaufs der Schwingungseigenschaften, Aus diesen Schwingungseigenschaften der Struktur bzw. deren zeitlichen Verlauf lassen sich vorzugsweise Informationen extrahieren, welche bevorzugt ebenfalls Aussagen über die Eigenschaften des die Struktur umgebenden Gases zulassen. Diese Schwingungseigenschaften betreffen vorzugsweise die Schwingungsamplitude, die Schwingungsfrequenz, die Schwingungsmode, die Schwingungsphase (z. B gegenüber der periodischen Erregungskraft, welche vom Aktuator appliziert wird), die Schwingungsintensität, die Dämpfung der Schwingung etc. Besonders bevorzugt ist jedoch, dass die Dämpfungseigenschaften aus den (anderen) Schwingungseigenschaften bestimmt werden kann, da die Dämpfungseigenschaften neben einem der Struktur inhärenten (und vorzugsweise konstanten bzw. bekannten und/oder berechenbaren) Dämpfungsanteil einen externen Dämpfungsanteil umfassen, welcher insbesondere durch eine Wechselwirkung der Struktur mit dem Umgebungsgas und dabei vor allem mit dem Druck des Umgebungsgases zustande kommt. Dieser wird vor allem durch Stöße der Gasmoleküle mit der Struktur an die Struktur vermittelt, wobei der durch die Stöße vermittelte Druck (Kraft pro Fläche) auf die Struktur vom Druck des Gases abhängt.

Da die Struktur vorzugsweise innerhalb bzw. am Analysevolumen vorliegt und mit einem zu analysierenden Gas, welches in das Analysevolumen gefüllt wurde, (direkt) wechselwirkt, können so Informationen über das Gas selber, insbesondere über dessen Druck, gewonnen werden. Z. B. können für ein Gas, welches die modulierter IR-Strahlung absorbiert und deswegen Schalldruckwellen erzeugt, Informationen über die Schalldruckwellen und deren Amplitude im zeitlichen Verlauf gewonnen werden, welche, wie einem durchschnittlichen Fachmann für PAS bekannt, Rückschlüsse über die Zusammensetzung des Gases erlauben, wie z. B. das Vorhandensein von bestimmten Gasmolekülen und deren Konzentration innerhalb des Volumens.

Es ist besonders bevorzugt, dass durch eine Messung der Schwingungseigenschaften Schwingungsamplitude, Schwingungsfrequenz und/oder Schwingungsphase der Struktur gegenüber der periodischen Anregung, insbesondere im zeitlichen Verlauf, die Dämpfung der Struktur, insbesondere durch Wechselwirkung mit dem zu analysierenden Gas, und deren zeitlicher Verlauf bestimmt werden kann. Die Wechselwirkung kommt insbesondere zu Stande durch Stöße der Struktur mit den Gasmolekülen. Die Stärke und/oder Häufigkeit der Stöße ist dabei von einem Druck des Gases abhängig. Werden durch Absorption modulierter IR-Strahlung im Rahmen der PAS Moleküle in Schwingungen versetzt und so bevorzugt Schalldruckwellen im Analysevolumen erzeugt, übertragen diese Schalldruckwellen vorzugsweise einen zu den Wellen proportionalen Druck auf die Struktur und beeinflussen so die Schwingungseigenschaften und/oder deren Dämpfung. Dieser Effekt ist vorzugsweise messbar bei einer Messung der Schwingungsamplitude, -intensität, -phase im Bezug zur periodischen Anregung und/oder Schwingungsfrequenz, insbesondere im zeitlichen Verlauf. Z. B. kann eine Überlagerung der (vorzugsweise schnellen), aktiven Schwingung der Struktur mit den auf die Struktur einwirkenden Druckwellen (welche vorzugsweise langsamer schwingen) die Schwingungsamplitude und/oder Schwingungsintensität beeinflussen, indem z. B. im zeitlichen Verlauf eine zumindest teilweise dem Druckverlauf folgende Einhüllende der Schwingungsamplitude der Schwingung der Struktur verursacht wird, insbesondere durch die variierende Dämpfung aufgrund der Druckschwankungen.

Ebenso kann bevorzugt eine durch die Schalldruckwellen variierte Dämpfung eine Phasenänderung der Schwingung der Struktur gegenüber der Anregungsfrequenz erzeugen, welche ebenfalls gemessen werden kann, z. B. durch eine Messung der Schwingungsamplitude der Struktur im zeitlichen Verlauf und Vergleich mit dem vorzugsweise periodischen Eingabe- bzw. Steuerungssignal des Aktuators zur periodischen Anregung der Struktur.

Dabei ist eine Messung insbesondere im Frequenzbereich resonanter Schwingungen der Struktur bevorzugt. Es kann z. B. bevorzugt sein, dass durch die vorzugsweise variierende Dämpfung aufgrund der Schalldruckwellen des Gases die Resonanzfrequenz verschoben wird. Dies kann z. B. dadurch gemessen werden, dass die Schwingungsamplitude der Struktur gemessen wird und gleichzeitig die Frequenz der periodischen Anregung durch den Aktuator in einem Frequenzbereich durchgestimmt wird, z. B. im Bereich einer Eigenfrequenz der Struktur. Durch Messung der Schwingungsamplitude kann so vorzugsweise die Resonanzfrequenz des schwingenden Gesamtsystems gemessen werden, wobei im Bereich der Resonanz die Schwingungsamplitude vorzugsweise maximal ist. Die Resonanzfrequenz des Gesamtsystems wird dabei vorzugsweise durch die Variation der Dämpfung gegenüber dem System mit konstanter Dämpfung verschoben. Durch eine Messung der Verschiebung bzw. des zeitlichen Verlaufs der Verschiebung kann z. B. auf die Schalldruckwellen geschlossen werden.

Die Schwingungseigenschaften der schwingfähigen Struktur umfassen vorzugsweise die Schwingungsamplitude. Die Schwingungsamplitude hängt bevorzugt ab von der Ausbildung der Schalldruckwellen im Analysevolumen. Die Schalldruckwellen im Analysevolumen beeinflussen insbesondere die Dämpfung der schwingfähigen Struktur (in bekannter, messbarer und/oder berechenbarer Weise), wobei die Dämpfung die Schwingungsamplitude beeinflusst. Da der Einfluss der Dämpfung auf die Schwingungsamplitude vorteilhafterweise ebenso bekannt, berechenbar und/oder messbar ist, kann aus deren Messung auf die Schalldruckwellen und somit auf das Gas und dessen Zusammensetzung geschlossen werden. Dabei kann insbesondere auf die Eigenschaften der Schalldruckwellen geschlossen werden. Es kann ebenso bevorzugt sein, dass ein direkter Zusammenhang zwischen Schalldruckwellen und Schwingungsamplitude bekannt, berechenbar und/oder messbar ist und so direkt von einer Messung der Schwingungsamplitude auf die Eigenschaften der Schalldruckwellen geschlossen werden kann.

Die Eigenschaften der Schalldruckwellen umfassen bevorzugt die mindestens eine Schwingungsfrequenz der Schalldruckwelle, die Amplitude der Schalldruckwelle, die Phase der Schalldruckwelle in Bezug auf die periodische Modulation des anregenden IR-Strahlung, die Schwingungsintensität der Schalldruckwelle, sowie vorzugsweise genannte Eigenschaften im zeitlichen Verlauf, wodurch z. B. ein Abklingen der Schalldruckwelle umfasst ist. Die Schwingungsamplitude der Struktur ist vorzugsweise messbar durch eine Messung der Auslenkung der Struktur an mindestens einem Ort und/oder mindestens einem Bereich der Stru ktu r.

Die Schwingungseigenschaften der schwingfähigen Struktur umfassen vorzugsweise die Schwingungsfrequenz. Die Schwingungsfrequenz hängt bevorzugt ab von der Ausbildung der Schalldruckwellen im Analysevolumen. Die Schalldruckwellen im Analysevolumen beeinflussen insbesondere die Dämpfung der schwingfähigen Struktur (in bekannter, messbarer und/oder berechenbarer Weise), wobei die Dämpfung die Schwingungsfrequenz beeinflusst. Da der Einfluss der Dämpfung auf die Schwingungsfrequenz vorteilhafterweise ebenso bekannt, berechenbar und/oder messbar ist, kann aus deren Messung auf die Schalldruckwellen und somit auf das Gas und dessen Zusammensetzung geschlossen werden. Dabei kann insbesondere auf die Eigenschaften der Schalldruckwellen geschlossen werden. Es kann ebenso bevorzugt sein, dass ein direkter Zusammenhang zwischen Schalldruckwellen und Schwingungsfrequenz bekannt, berechenbar und/oder messbar ist und so direkt von einer Messung der Schwingungsamplitude auf die Eigenschaften der Schalldruckwellen geschlossen werden kann.

Die Schwingungsfrequenz der Struktur ist vorzugsweise messbar durch eine Messung der Auslenkung der Struktur an mindestens einem Ort und/oder mindestens einem Bereich der Struktur, wobei eine Betrachtung der Auslenkung über mindestens eine Schwingungsperiode, vorzugsweise mehrere Schwingungsperioden, in einer dem Fachmann bekannten Weise Auskunft über die Schwingungsfrequenz der schwingungsfähigen Struktur gibt.

Die Schwingungseigenschaften der schwingfähigen Struktur umfassen vorzugsweise die mindestens eine resonante Schwingungsfrequenz bzw. Resonanzfrequenz $\omega_0$ der Struktur. Es kann bevorzugt sein, dass die Struktur mehrere Resonanzfrequenzen für bevorzugt mehrere Schwingungsmoden aufweist. Die Resonanzfrequenz hängt bevorzugt ab von der Ausbildung der Schalldruckwellen im Analysevolumen. Die Schalldruckwellen im Analysevolumen beeinflussen insbesondere die Dämpfung der schwingfähigen Struktur (in bekannter, messbarer und/oder berechenbarer Weise), wobei die Dämpfung die Resonanzfrequenz beeinflusst. Da der Einfluss der Dämpfung auf die Resonanzfrequenz vorteilhafterweise ebenso bekannt, berechenbar und/oder messbar ist, kann aus deren Messung auf die Schalldruckwellen und somit auf das Gas und dessen Zusammensetzung geschlossen werden. Dabei kann insbesondere auf die Eigenschaften der Schalldruckwellen geschlossen werden. Es kann ebenso bevorzugt sein, dass ein direkter Zusammenhang zwischen Schalldruckwellen und Schwingungsamplitude bekannt, berechenbar und/oder messbar ist und so direkt von einer Messung der Resonanzfrequenz auf die Eigenschaften der Schalldruckwellen geschlossen werden kann.

Die Resonanzfrequenz der Struktur ist vorzugsweise messbar durch eine Messung der Auslenkung der Struktur an mindestens einem Ort und/oder mindestens einem Bereich der Struktur, wobei eine Betrachtung der Auslenkung über mindestens eine Schwingungsperiode, vorzugsweise mehrere Schwingungsperioden, in einer dem Fachmann bekannten Weise Auskunft über die aktuelle Schwingungsfrequenz der schwingungsfähigen Struktur gibt. Dabei wird bevorzugt diejenige Frequenz als Resonanzfrequenz erkannt welche eine maximale Auslenkung bzw. Schwingungsamplitude aufweist. Bevorzugt werden dabei verschiedene Anregungsfrequenzen innerhalb mindestens eines Frequenzbereichs vom Aktuator eingestellt, um die Resonanzfrequenz zu messen bzw. erkennen.

Die Schwingungseigenschaften der schwingfähigen Struktur umfassen vorzugsweise die Schwingungsphase gegenüber der (periodischen) Anregung der Struktur durch den Aktuator. Die Schwingungsphase beschreibt bevorzugt die Schwingungsphase gegenüber der (periodischen) Anregung der Struktur. Die Schwingungsphase hängt bevorzugt ab von der Ausbildung der Schalldruckwellen im Analysevolumen. Die Schalldruckwellen im Analysevolumen beeinflussen insbesondere die Dämpfung der schwingfähigen Struktur (in bekannter, messbarer und/oder berechenbarer Weise), wobei die Dämpfung die Schwingungsphase gegenüber der periodischen Anregung beeinflusst. Da der Einfluss der Dämpfung auf die Schwingungsphase vorteilhafterweise ebenso bekannt, berechenbar und/oder messbar ist, kann aus deren Messung auf die Schalldruckwellen und somit auf das Gas und dessen Zusammensetzung geschlossen werden. Dabei kann insbesondere auf die Eigenschaften der Schalldruckwellen geschlossen werden. Es kann ebenso bevorzugt sein, dass ein direkter Zusammenhang zwischen Schalldruckwellen und Schwingungsphase bekannt, berechenbar und/oder messbar ist und so direkt von einer Messung der Schwingungsamplitude auf die Eigenschaften der Schalldruckwellen geschlossen werden kann.

Die Schwingungsphase der Struktur ist vorzugsweise messbar durch eine Messung der Auslenkung der Struktur an mindestens einem Ort und/oder mindestens einem Bereich, wobei eine Betrachtung der Auslenkung über mindestens eine Schwingungsperiode, vorzugsweise mehrere Schwingungsperioden und Vergleich mit dem zeitlichen Verlauf der Anregungsfrequenz in einer dem Fachmann bekannten Weise Auskunft über die Schwingungsphase der schwingungsfähigen Struktur gibt.

Die Schwingungseigenschaften der schwingfähigen Struktur umfassen vorzugsweise die Dämpfung der Schwingung der Struktur, insbesondere den durch die Schalldruckwellen beeinflussten Teil der Dämpfung. Der Ausdruck Dämpfung beschreibt insbesondere den durch die Schalldruckwellen beeinflussten Teil der Dämpfung. Die Dämpfung hängt bevorzugt in bekannter, messbarer und/oder berechenbarer Weise ab von der Ausbildung der Schalldruckwellen im Analysevolumen. Daher kann vorteilhafterweise aus der Messung der Dämpfung auf die Schalldruckwellen und somit auf das Gas und dessen Zusammensetzung geschlossen werden. Dabei kann insbesondere auf die Eigenschaften der Schalldruckwellen geschlossen werden. Die Dämpfung der Struktur ist vorzugsweise messbar durch eine Messung der Auslenkung der Struktur an mindestens einem Ort und/oder mindestens einem Bereich und Vergleich dieser mit einer Messung einer nicht durch Schalldruckwellen gedämpfte Auslenkung bzw. Schwingung.

Die Schwingungseigenschaften der schwingfähigen Struktur umfassen vorzugsweise den Gütefaktor und/oder Q-Faktor der Schwingung der Struktur. Dieser wird vorzugsweise gemessen durch Messung der Resonanzfrequenz und durch die Halbwertsbreite der Resonanz $\Delta\omega$ und beträgt insbesondere $Q = \omega_0/\Delta\omega$, wobei die Halbwertsbreite vorzugsweise definiert ist als der Frequenzabstand zwischen den beiden Frequenzen, bei denen die Schwingungsamplitude $1/\sqrt{2}$ der maximalen Schwingungsamplitude (in Resonanz), bzw. bei denen die Schwingungsintensität die Hälfte der maximalen Schwingungsintensität (in Resonanz) beträgt. Der Gütefaktor hängt bevorzugt in bekannter, messbarer und/oder berechenbarer Weise ab von der Ausbildung der Schalldruckwellen im Analysevolumen. Daher kann vorteilhafterweise aus der Messung des Gütefaktors auf die Schalldruckwellen und somit auf das Gas und dessen Zusammensetzung geschlossen werden. Dabei kann insbesondere auf die Eigenschaften der Schalldruckwellen geschlossen werden.

Die Schwingungseigenschaften der schwingfähigen Struktur hängen insbesondere von der Ausbildung der Schalldruckwellen ab, das bedeutet bevorzugt, dass durch Messung der Schwingungseigenschaften eine Messung der Eigenschaften der Schalldruckwellen ermöglicht wird. Die Eigenschaften der Schalldruckwellen umfassen insbesondere die Frequenz, Amplitude, Intensität und/oder Phase in Bezug auf die modulierte IR-Anregung der Schalldruckwellen, bevorzugt im zeitlichen Verlauf. Insbesondere ermöglicht so eine Messung der Schwingungseigenschaften eine Messung der Gaszusammensetzung (bei Absorption der IR-Strahlung) des Gases im Analysevolumen (bzw. im Probenvolumen), wie bei der PAS üblich.

Vorzugsweise können die Schwingungseigenschaften, insbesondere die vorstehend genannten Schwingungseigenschaften, auch in einem zeitlichen Verlauf gemessen werden und z. B. eine (chronologisch nach Messzeitpunkt geordnete) Zeitreihe der Messungen der Eigenschaften zum Zeitpunkt der jeweiligen Messung umfassen. Durch den zeitlichen Verlauf der Schwingungseigenschaften können vorzugsweise Rückschlüsse weitere Eigenschaften des analysierten Gases getroffen werden, wie z. B. ein Abklingverhalten der Schallwellen nach einer Anregung durch IR-Strahlung.

Vorzugsweise kann über eine Messung der Schwingungseigenschaften nicht nur eine Aussage über die Eigenschaften der Schalldruckwellen getroffen werden, sondern auch über einen konstanten Druck ohne das Vorhandensein von Schalldruckwellen durch modulierte Absorption von Gasmolekülen. So kann insbesondere das Einschwingverhalten bei Einsetzen einer Absorption und/oder das Relaxationsverhalten nach einer modulierten Absorption gemessen werden.

Vorzugsweise können die Schwingungseigenschaften durch Lock-In-Technik unter Verwendung eines Lock-In-Verstärkers gemessen werden. Da insbesondere die Messung der Schwingungseigenschaften vorzugsweise im Wesentlichen bei der Frequenz der Anregung der schwingfähigen Struktur vorgenommen wird bzw. das Messsignal durch die Frequenz der Anregung moduliert ist, kann durch Verwendung eines Lock-In-Verstärkers bzw. einer Lock-In-Technik ein schmalbandiger Bandpassfilter auf das Messsignal angewendet werden und auf diese Art Rauschen, insbesondere thermisches Rauschen, minimiert werden.

Es kann ebenso bevorzugt sein, durch die beschriebene Lock-In-Technik nur Signale im Bereich der Modulationsfrequenz der modulierten IR-Strahlung schmalbandig herauszufiltern und auf diese Art das Rauschen der Messung zu minimieren.

Vorzugsweise können durch die Wechselwirkung der schwingenden, schwingfähigen Struktur mit dem Gas auch direkt Informationen über Dichte und/oder Viskosität des Gases gewonnen werden und so vorteilhafterweise gemeinsam mit den durch die PAS erzeugten Schalldruckwellen ein noch umfassenderes Bild über die Zusammensetzung des Gases im Analysevolumen, insbesondere im Probenvolumen liefern und/oder die Präzision der PAS, vorzugsweise synergistisch erhöhen [2].

Ein bevorzugtes photoakustisches Spektroskop nach dieser Beschreibung kann dabei in seiner Bauart aufgrund der Einfachheit und Miniaturisierbarkeit der Komponenten sehr kompakt und robust konzipiert sein und z. B. in einem Smartphone oder sonstigem tragbaren Gerät integriert bzw. integrierbar sein.

Das erfinderische Spektroskop bietet insbesondere den Vorteil, die Anregungsfrequenzen der modulierten IR-Strahlung zu entkoppeln von einer Messfrequenz durch den Schalldruckdetektor, indem der Schalldruckdetektor eine aktiv vom Aktuator angeregte schwingfähige Struktur umfasst und eine Messung von erzeugten Schalldruckwellen durch die ebenfalls umfasste Messeinheit bei dieser Frequenz der schwingfähigen Struktur liegt. Diese Frequenz kann bevorzugt höher sein als die Frequenz der modulierten IR-Strahlung und der zu detektierenden Schalldruckwellen, wodurch insbesondere bestimmte Rauschquellen bei der Detektion des Schalls vermindert und/oder rausgerechnet werden können, welche bei der (bevorzugt niedrigeren) Frequenz der Schalldruckwellen liegen und/oder durch die modulierte IR-Strahlung selber verursacht werden. Beispielhaftes Rauschen, welches gemindert werden kann ist thermisches Rauschen, 1/f Rauschen und/oder 1/f$^2$ Rauschen.

In einer bevorzugten Ausführungsform der Erfindung umfasst das Spektroskop eine Steuereinheit, welche konfiguriert ist die schwingfähige Struktur mit einer Anregungsfrequenz zur Schwingung anzuregen und den modulierbaren Infrarot-Emitter derart zu steuern, dass dieser mit einer Modulationsfrequenz modulierte Infrarotstrahlung emittiert, wobei die Modulationsfrequenz der Infrarotemitters um einen Faktor 5, bevorzugt 10 oder mehr kleiner ist als die Anregungsfrequenz des schwingfähigen Systems. Besonders bevorzugt beträgt die Modulationsfrequenz des Infrarotemitters zwischen 1 Hz und 200 Hz, während die Anregungsfrequenz der schwingfähigen Struktur mehr als 1 kHz, bevorzugt zwischen 1 kHz und 200 kHz beträgt.

Eine Steuereinheit ist bevorzugt geeignet, elektrische Steuersignale auszugeben, welche zum einen den Aktuator ansteuern und zum anderen den modulierbaren Infrarot-Emitter. Dafür kann die Steuereinheit bevorzugt mindestens zwei Signalausgänge aufweisen, wobei ein Ausgang vorzugsweise mit einem Signaleingang des Aktuators verbunden wird und ein anderer Ausgang mit einem Signaleingang des Infrarot-Emitters. Die hier ausgegebenen Signale werden vorzugsweise Ansteuerungssignale oder Steuerungssignale genannt. Das am Signaleingang des Aktuators anliegende Signal soll dabei bevorzugt so ausgelegt sein, dass der Aktuator die schwingfähige Struktur mit einer Anregungsfrequenz zur Schwingung anzuregen. Dafür wird das Signal der Steuereinheit im zeitlichen Verlauf angepasst, z. B. in einer Amplitude und einer Signalform der elektrischen Spannung.

Bevorzugt handelt es sich um ein periodisches Signal mit einer Frequenz, welcher im Wesentlichen der Anregungsfrequenz entspricht. Analog wird das Signal der Steuereinheit, welches am Signaleingang des IR-Emitters anliegt, im zeitlichen Verlauf angepasst, z. B. in einer Amplitude und einer Signalform bevorzugt der elektrischen Spannung, um eine emittierte IR-Strahlung mit der Modulationsfrequenz zu erzeugen. Bevorzugt handelt es sich ebenfalls um ein periodisches Signal mit einer Frequenz, welcher im Wesentlichen der Modulationsfrequenz entspricht. Die Frequenzen beider Signale unterscheiden sich jedoch vorzugsweise. Insbesondere ist die Modulationsfrequenz der Infrarotemitters bevorzugt um einen Faktor 2, bevorzugt 5, 10 oder mehr kleiner ist als die Anregungsfrequenz des schwingfähigen Systems. Dabei kann vorzugsweise das Signal für die Modulationsfrequenz vom Signal für die Anregungsfrequenz abgeleitet werden, z. B. durch einen auf das Signal der Anregungsfrequenz angewendeten Frequenzteiler und/oder durch weitere Signalbearbeitung. Diese findet vorzugsweise in der Steuereinheit statt.

Beide Signale können jedoch vorzugsweise auch unabhängig voneinander generiert werden. Insbesondere kann es bevorzugt sein, dass Signal für die Modulationsfrequenz auf eine bestimmte Art und Weise zusätzlich zu modulieren, um die spätere Erkennbarkeit bei Detektion einer Schalldruckwelle zu erhöhen. Es kann auch bevorzugt sein, wenn die Anregungsfrequenz ein ganzzahliges Vielfaches der Modulationsfrequenz beträgt, eine feste, aber einstellbare Phasenverschiebung zwischen beiden Signalen durch die Steuereinheit zu erzeugen. Die Steuereinheit weist bevorzugt mindestens einen Eingang auf, über den externe Befehle an die Steuereinheit zur Einstellung der Ausgangssignale übermittelt werden können. Eine Steuereinheit ist bevorzugt mindestens eine integrierte Schaltung, welche digitale und/oder analoge elektrische Signale bevorzugt für die vorgenannten Zwecke empfangen und/oder erzeugen kann. Bevorzugt sind die Ansteuerungssignale analoge Signale, welche bezüglich der Signaleigenschaften (Amplitude, Frequenz, Phase, vorzugsweise im zeitlichen Verlauf) für eine Optimierung der PAS anpassbar sind. Die Steuereinheit ist bevorzugt mindestens ein Computer, ein Mikroprozessor, ein Field Programmable Gate Array (FPGA) und/oder eine sonstige elektronische Schaltung und kann z. B. umfassen: Digital-Analog-Wandler, Analog-Digital-Wandler, Speicher und/oder (Signal-) Verstärker.

Durch eine Modulationsfrequenz des Infrarotemitters, welche um einen Faktor 2, bevorzugt 5, 10 oder mehr kleiner ist als die Anregungsfrequenz der schwingfähigen Struktur ist, kann bevorzugt die Messung der Schalldruckwellen, welche im Wesentlichen die Modulationsfrequenz aufweisen, im Wesentlichen im Bereich der Anregungsfrequenz vorgenommen werden. Bevorzugt kann das durch die Schalldruckwellen verursachte Messsignal so mit dem Signal der Anregungsfrequenz moduliert werden, da diese im Wesentlichen der Frequenz der schwingfähigen Struktur bei Anregung entspricht. Dadurch kann vorteilhafterweise ein Rauschen im Bereich niedriger Frequenzen und insbesondere im Bereich der Modulationsfrequenz herausgerechnet und/oder gefiltert werden und die PAS verbessert werden. Bei der PAS des Standes der Technik ist ebenfalls ein Nachteil, dass durch die modulierte Infrarot-Strahlung selber ein (Rausch-) Signal am Schalldetektor generiert werden kann. Da hier die Messung bei in etwa mindestens um einen Faktor 2 höheren Frequenzen stattfindet, kann insbesondere diese Störquelle der Messungen herausgefiltert und/oder herausgerechnet werden. Hierdurch kann innerhalb eines gewissen Verhältnisses zwischen beiden Frequenzen bevorzugt mit einer Erhöhung des Faktors eine Verbesserung der Messung erzielt werden.

In einer bevorzugten Ausführungsform der Erfindung beträgt die Modulationsfrequenz des Infrarotemitters zwischen 1 Hz und 200 Hz, während die Anregungsfrequenz der schwingfähigen Struktur zwischen 1 kHz und 200 kHz beträgt. Diese Frequenzen haben sich besonders bewährt, um hohes Signal-zu-Rausch-Verhältnis zu gewährleisten. Zudem sind diese Modulationsfrequenzen besonders geeignet, um einen kostengünstigen, elektrisch modulierten thermischen IR-Emitter zu realisieren, welcher bevorzugt aufgrund thermischer Trägheiten auf einen Bereich von Modulationsfrequenzen dieser Größenordnung limitiert ist. Zum anderen lässt sich eine mechanisch schwingende Struktur angetrieben durch einen Aktuator bei diesen Anregungsfrequenzen besonders einfach, robust und kostengünstig realisieren.

In dieser Ausführungsform ist bevorzugt, dass die Steuereinheit die Eignung aufweist, elektronische Steuersignale dieser beiden Größenordnungen zu erzeugen. Die Steuereinheit sollte also vorzugsweise eine geeignete elektrische Bandbreite innerhalb der jeweiligen Frequenzbereiche aufweisen. Der Infrarotemitter bzw. bei Vorhandensein ein externer Modulator sollte bevorzugt geeignet sein, die infrarote Strahlung bei dieser Frequenz zu modulieren. Analog muss der Aktuator geeignet sein, die schwingfähige Struktur bei diesen Frequenzen anzuregen und die Struktur selber muss geeignet sein, in mindestens einer Schwingungsmode bei mindestens einer dieser Frequenzen zu schwingen. Vorzugsweise weist die Struktur bei mindestens einer Frequenz innerhalb des bevorzugten Frequenzbereichs in mindestens einer Schwingungsmode eine Resonanzfrequenz auf.

In einer bevorzugten Ausführungsform der Erfindung entspricht die Anregungsfrequenz der schwingfähigen Struktur einer Resonanzfrequenz der schwingfähigen Struktur. Wie bereits vorstehend beschrieben, ist ein Betrieb der schwingfähigen Struktur in einem Bereich der bzw. bei der Resonanzfrequenz für eine Messung der Schalldruckwellen bzw. deren Eigenschaften besonders gut geeignet. Insbesondere ist in Resonanz die Schwingungsamplitude der jeweiligen Schwingungsmode vorzugsweise maximal, wodurch sich die Messung der Schwingungseigenschaften vorzugsweise verbessern lässt.

In einer weiteren bevorzugten Ausführungsform der Erfindung umfasst das Spektroskop einen Array von Schalldruckdetektoren. Ein Array von Schalldruckdetektoren umfasst bevorzugt mehrere Schalldruckdetektoren, z. B. 2, 3, 4, 5, 10, 20 oder 50 Schalldruckdetektoren, die zueinander räumlich angeordnet sind. Insbesondere umfasst ein solches Array mehrere schwingfähige Strukturen, welche durch mindestens einen Aktuator anregbar sind und deren Schwingungseigenschaften durch mindestens eine Messeinrichtung messbar sind. Besonders bevorzugt weist dabei jede schwingfähige Struktur einen eigenen Aktuator und/oder eine eigene Messeinrichtung auf. Eine Anordnung kann vorzugsweise die Form einer Matrix mehrere Zeilen (Detektoren horizontal entlang einer Linie angeordnet) und/oder Spalten (Detektoren vertikal entlang einer Linie angeordnet) von Schalldruckdetektoren umfassen. So kann vorteilhafterweise eine räumlich aufgelöste Messung von Schalldruckwellen vorgenommen werden. Somit können z. B. zusätzliche Informationen über die räumliche Verteilung eines zu messenden Gases gewonnen werden.

Im Falle einer Ausführungsform eines Analysevolumens, welche eine Probekammer und eine Referenzkammer aufweist (s. u.), kann es bevorzugt sein, in jeder Kammer mindestens einen Schalldruckdetektor aufzuweisen, um in jeder Kammer separat zu messen und somit Störquellen, z. B. externe Schalldruckwellen, welche nicht von der in der Probekammer absorbierten IR-Strahlung herrühren, vorzugsweise nach der Messung herausrechnen zu können. Bei einem Array von Schalldruckdetektoren kann vorzugsweise jeder Detektor unterschiedliche Schwingungseigenschaften, insbesondere auch ohne Einwirkung von Schalldruckwellen, aufweisen. Dabei können die Strukturen selber unterschiedliche Eigenschaften haben und/oder auf unterschiedliche Weise (Amplitude, Frequenz, Phase) angeregt werden. Eine bevorzugte Ausführungsform eines Array kann z. B. mehrere Schalldruckdetekoren, insbesondere mehrere schwingfähige Strukturen umfassen, die z. B. in ein Matrizenlayout (bspw. in einer flächigen Ausdehnung von 9 mm × 9 mm) angeordnet sind, die in einem Leiterplatten-kompatiblen Gehäuse gemäß eines standardmäßigen elektronischen Bauteils, z. B. in 24-pin DIP (dual inline package) Bauweise umfasst sind [2].

In einer weiteren bevorzugten Ausführungsform der Erfindung ist der Aktuator ein MEMS-Aktuator, bevorzugt ausgewählt aus der Gruppe umfassend elektrostatischer Aktuator, piezoelektrischer Aktuator, elektromagnetischer Aktuator und/oder thermischer Aktuator. Ein MEMS-Aktuator ist bevorzugt ein Aktuator, der mithilfe von üblichen Herstellungsmethoden der Mikrosystemtechnik hergestellt wird und des Weiteren vorteilhafterweise Abmessungen in der Größenordnung μm aufweist. Ein solcher Aktuator ist besonders kompakt, robust und wartungsarm und lässt sich einfach und kostengünstig herstellen. Insbesondere kann die schwingfähige Struktur, welche durch den Aktuator zu Schwingung angeregt wird, ebenfalls ein MEMS-Element sein, das heißt bevorzugt, das Struktur und Aktuator vorzugsweise in einem Herstellungsschritt mit dem MEMS-Aktuator herstellbar sind und kompakt sind. Es kann dabei wünschenswerterweise in Teilen das gleiche Substrat zur Herstellung verwendet werden. Dies vereinfacht und verbilligt die Herstellung.

Die vorstehend genannten Aktuatoren sind dabei besonders gut für eine Anregung einer großen Zahl schneller Schwingungen geeignet und weisen insbesondere aufgrund des kompakten Aufbaus einen geringen Energiebedarf auf. Auch ist die Bandbreite der erzielbaren Schwingungen aufgrund des kompakten Aufbaus und der geringen Trägheiten vorteilhafterweise sehr hoch.

In einer weiteren bevorzugten Ausführungsform der Erfindung umfasst die schwingungsfähige Struktur einen Biegebalken, ein Ventil und/oder eine Membran.

Die schwingungsfähige Struktur ist vorzugsweise schwingbar gelagert und/oder von der Dicke und/oder der Materialwahl schwingfähig bei den gewünschten Frequenzen ausgelegt. Dies gilt insbesondere für die genannten Ausführungsformen der schwingfähigen Struktur. Die schwingfähige Struktur, vor allem Biegebalken, Membran und/oder Ventil, liegt insbesondere an einer äußeren Grenzfläche des Analysevolumens und/oder der Probekammer vor. Es kann besonders vorteilhaft sein, dass die schwingfähige Struktur innerhalb eines Verbindungskanals zwischen Probekammer und Referenzkammer angeordnet ist, wie untenstehend beschrieben. Dabei bildet oder umfasst die schwingfähige Struktur insbesondere eine Trennwand zwischen beiden Kammern, welche zumindest teilweise oder im Wesentlichen druckdicht ist.

Ein Cantilever, oder synonym, Biegebalken ist vorzugsweise ein räumlich ausgedehntes, insbesondere längliches Element, welches entlang mindestens einer Seite schwingfähig gelagert und ansonsten vorzugsweise freistehend ist. Ein Cantilever kann z. B. die Form eines flächigen, länglichen Quaders aufweisen, dessen Dicke deutlich kleiner im Vergleich zur Quer- und Längsausdehnung ist, wobei bevorzugt die Querausdehnung kleiner ist als die Längsausdehnung Es kann jedoch auch ein beidseitig bzw. mehrseitig schwingbar gelagerter Biegebalken bevorzugt sein.

Eine Membran ist bevorzugt eine dünne, flächige Struktur mit einem Umfang in z. B. im Wesentlichen runder und/oder polygonaler Ausprägung. Die Membran ist vorzugsweise wenigstens bereichsweise entlang eines des Umfangs schwingbar gelagert. Eine Membran kann vorzugsweise gegenüber einem Gas in der Analysekammer im Wesentlichen druckdicht sein. Liegt die Membran an einer äußeren Grenzfläche der Analysekammer und/oder Probekammer vor, kann die Membran vorzugsweise ebenfalls gegenüber einem Gas, welches auf einer anderen Seite der Membran vorliegt, ebenfalls druckdicht sein.

Ein Ventil ist insbesondere ein Bauteil zur Absperrung oder Steuerung des Durchflusses von Fluiden, vor allem Gasen. Vorzugsweise wird dabei ein Verschlussteil (z. B. Teller, Kegel, Kugel, Membran und/oder Nadel) ungefähr parallel zur Strömungsrichtung des Fluids bewegt und kann bevorzugt je nach Positionierung den zumindest teilweisen Durchfluss ermöglichen oder nicht. Die Strömung wird bspw. unterbrochen, indem das Verschlussteil mit einer Dichtfläche an eine passend geformten Randbereich einer Öffnung gepresst wird. Vorzugsweise kann ein Ventil so konfiguriert sein, dass bei zumindest auf einer Seite des Ventils vorliegendem Druck oberhalb eines Schwellwerts das Ventil durch den Druck zumindest teilweise geöffnet wird und ein zumindest teilweiser Durchfluss eines Gases, vorzugsweise in Richtung des abnehmenden Drucks, ermöglicht wird. Ein Ventil liegt vorteilhafterweise an einem Außenbereich des Analysevolumens und/oder der Probekammer vor, z. B. in einem Verbindungskanal und ist so angeordnet, dass es durch von der modulierten IR-Strahlung hervorgerufenen Schalldruckwellen bewegt bzw. zum Schwingen gebracht werden kann.

In einer weiteren bevorzugten Ausführungsform der Erfindung umfasst der Schalldruckdetektor einen piezoelektrischen Balken, welcher bevorzugt als Freischwinger im Analysevolumen angeordnet vorliegt. Ein piezoelektrischer Balken ist vorzugweise ein Biegebalken, welcher einen piezoelektrischen Aktuator umfasst. Das bedeutet insbesondere, dass der Biegebalken mindestens ein piezoelektrisches Material umfasst, welches aufgrund seiner Eigenschaften und/oder der Anordnung innerhalb des Cantilevers bei geeigneter elektrischer Ansteuerung durch ein elektrisches Steuersignal eine hierdurch gesteuerte, piezoelektrisch angeregte Schwingung ermöglicht, um den Schalldruckdetektor wie hierin beschrieben zu ermöglichen.

Bevorzugt weist der piezoelektrische Balken mindestens eine Kontaktierung zur Steuerung durch das elektrische Steuersignal auf, insbesondere in Form mindestens einer Elektrode, an welcher ein elektrisches Steuersignal anliegt. Insbesondere umfasst ein piezoelektrischer Balken mindestens zwei Elektroden. Dem durchschnittlichen Fachmann ist bekannt, wie ein piezoelektrischer Aktuator, welcher die gewünschten Schwingungseigenschaften des aktiv angeregten Biegebalkens erzeugt, z. B. durch geeignete Materialauswahl, geeignete Anordnung des Materials und/oder geeignete elektrische Ansteuerung durch ein elektrisches Steuersignal, bereit gestellt werden kann. Ein Freischwinger ist insbesondere ein einseitig schwingfähig gelagerter und ansonsten freistehender Biegebalken.

Ein piezoelektrisches Material ist bevorzugt ein Material, welches geeignet ist, einen piezoelektrischen Effekt aufzuweisen. Der piezoelektrische Effekt beschreibt bevorzugt die Verformung eines Materials bei Anlegen einer elektrischen Spannung und/oder eines elektrischen Feldes (inverser Piezoeffekt), wodurch insbesondere durch das Material eine Kraft ausgeübt werden kann. Bevorzugt beschreibt der piezoelektrische Effekt ebenfalls die Änderung der elektrischen Polarisation und somit bevorzugt das Auftreten einer elektrischen Spannung und/oder eine Änderung der Impedanz an einem Festkörper, wenn er elastisch verformt wird (direkter Piezoeffekt).

Bevorzugt hängt die Verformung einer piezoelektrischen Struktur insbesondere von der elektrischen Polarisation innerhalb der Struktur ab und kann vorzugsweise u. a. durch Anordnung der Elektroden beeinflusst werden. Dadurch kann vorzugsweise die Schwingungsmode der Struktur beeinflusst werden.

Dabei kann der Balken bevorzugt ein unimorpher bzw. monomorpher Cantilever sein, der vorzugsweise eine aktive Schicht und eine inaktive bzw. passive Schicht umfasst. Dabei bezeichnet eine aktive Schicht vorzugsweise eine piezoelektrische Schicht, bei der eine Kraft bzw. eine Deformation durch ein anliegendes elektrisches Feld, insbesondere durch Anlegen einer elektrischen Steuerspannung, ausgelöst wird. Diese Kraft bzw. Deformation erzeugt vorzugsweise ein Durchbiegen und/oder eine Verformung des Balkens, welche bevorzugt durch ein periodisches elektrisches Steuersignal eine aktive Schwingung auslösen kann. Die inaktive Schicht umfasst dabei vorzugsweise ein nicht-piezoelektrisches Material. Dabei ist bevorzugt, dass aktive Schicht und inaktive Schicht so zusammenwirken, dass eine resultierende Kraft aufgrund der angelegten Steuerspannung erzeugt wird, welche eine Auslenkung des Balkens hervorruft, welche bei einer Periodizität des elektrischen Signals bevorzugt eine Schwingung verursacht. Es kann ebenso bevorzugt sein, dass auch die inaktive Schicht ein piezoelektrisches Material umfasst, welches jedoch nicht elektrisch kontaktiert und/oder durch ein Steuersignal angesteuert wird, an dem vorteilhafterweise kein elektrisches Steuersignal angelegt wird und welche insbesondere kein externes elektrisches Feld erfährt, welches eine interne Kraft und/oder eine Verformung aufgrund des indirekten piezoelektrischen Effekts der inaktiven Schicht auslöst.

Ebenso kann der Cantilever bevorzugt ein bimorpher Cantilever sein, welcher vorzugsweise mindestens zwei aktive Schichten umfasst. Dabei kann bevorzugt eine inaktive Schicht zwischen den mindestens zwei aktiven Schichten vorhanden sein. Dabei ist bevorzugt, dass bei Anlegen einer elektrischen Spannung eine aktive Schicht kontrahiert, während die zweite aktive Schicht expandiert, wodurch vorteilhafterweise eine Biegung des Cantilevers erreicht wird, welche insbesondere gegenüber einem unimorphen Cantilever verstärkt ist, also z. B. bei gleicher angelegter Spannung eine größere Amplitude aufweist.

In einer beispielhaften Ausführungsform hat der Cantilever eine Länge von 1.511 μm, eine Breite von 1.268 μm und eine Dicke von 45 μm und ist dabei insbesondere entlang der Breite einseitig schwingfähig gelagert und ansonsten freistehend. Der Cantilever umfasst bevorzugt ein piezoelektrisches Material, insbesondere Aluminiumnitrid (AIN) und umfasst Elektroden, welche z. B. für die Anregung einer dachziegelartigen (engl.: *rooftile-shaped*) Vibrations-Schwingungsmode optimiert sind, z. B. durch zwei Elektrodenpaare, wobei vorzugsweise jede Elektrode den halben Sensor bedeckt und das piezoelektrische Material durch eine parallele oder antiparallele elektrische Stimulation durch die Elektroden in verschiedene gerade und ungerade Schwingungsmoden versetzt werden kann [2].

Die Schwingungsmode eines Cantilevers wird dabei neben Material und geometrischer Ausformung des Cantilevers bevorzugt durch eine Anordnung von Elektroden und/oder durch das angelegte elektrische Steuersignal bestimmt.

In einer anderen beispielhaften Ausführungsform kann der Cantilever eine Länge von 1.000 μm und eine Breite von 250 μm aufweisen und z. B. ebenfalls AIN umfassen. Dabei kann bspw. eine Elektrode auf einer oberen Oberfläche des Cantilevers angeordnet und in zwei in etwa gleich große Streifen aufgeteilt sein, wobei ein Streifen als Anregungselektrode fungiert, an welcher vorzugsweise ein elektrisches Steuersignal anliegt und der andere Streifen für eine elektrische Messung der Schwingungseigenschaften verwendet wird, wie untenstehend beschrieben wird.

In einer bevorzugten Ausführungsform der Erfindung weist der piezoelektrische Biegebalken zwei Elektroden und eine piezoelektrische Zwischenschicht aus einem Material ausgewählt aus der Gruppe enthaltend Blei-Zirkonat-Titanat (PZT), Aluminiumnitrid (AIN) oder Zinkoxid (ZnO) auf.

Diese Materialien haben besonders vorteilhafte piezoelektrische Eigenschaften. Durch zwei Elektroden lassen sich piezoelektrische Biegebalken besonders einfach elektrisch ansteuern und durch ein elektrisches Steuersignal in Schwingungen versetzen. Die zwei Elektroden können dabei bevorzugt auf einer Oberfläche des Cantilevers, z. B oben oder unten, nebeneinander angeordnet sein und/oder auf gegenüberliegenden Oberflächen des Cantilevers, oben und unten. Mindestens eine Elektrode kann dabei ebenso innerhalb, bspw. in einer Zwischenschicht des Cantilevers, angeordnet sein. Vorzugsweise sind Material und/oder Anordnung der Elektroden ausgesucht für gewünschte Schwingungseigenschaften bzw. die gewünschte Schwingungsmode bei einer aktiven Anregung mit und/oder ohne Wechselwirkung mit Schalldruckwellen.

In einer weiteren bevorzugten Ausführungsform der Erfindung umfasst das Analysevolumen eine Probekammer und eine Referenzkammer, wobei der Infrarotemitter derart angeordnet vorliegt, dass dieser die Probekammer und nicht die Referenzkammer bestrahlt und wobei zwischen der Probekammer und Referenzkammer einen Verbindungskanal vorliegt, in welchem sich die schwingfähige Struktur befindet. Diese Ausführungsform zeichnet sich durch eine besonders fehlerfreie bzw. fehlerunanfällige PAS aus, da insbesondere Schall von unerwünschten Schallquellen bei der Messung und/oder der Auswertung der Messung herausgerechnet bzw. nicht mitgemessen wird. In einer besonders bevorzugten Ausführungsform des Analysevolumens umfasst dieses ein Probenvolumen und ein Referenzvolumen, welche bevorzugt mindestens ungefähr, insbesondere genau gleiche Abmessungen aufweisen. Zwischen Probenvolumen und Referenzvolumen liegt vorteilhafterweise ein Übergangsbereich vor, in welchem bevorzugt der Schalldetektor vorliegt. Probenvolumen und Referenzvolumen können bevorzugt ebenfalls als Probekammer und Referenzkammer bezeichnet werden, der dazwischen vorliegende Übergangsbereich auch als Verbindungskanal. Vorzugsweise wird dabei nur das Probenvolumen der modulierten IR Strahlung ausgesetzt. Dadurch können sich durch eine stattfindende Absorption der modulierten Strahlung im Probenvolumen andere Druckverhältnisse aufgrund der entstehenden Schalldruckwellen ausbilden, welche sich mit Druckverhältnissen überlagern, welche bevorzugt sowohl das Probenvolumen als auch das Referenzvolumen betreffen und sowohl von einem statistischen Druck innerhalb des Analysevolumens herrühren können als auch von vorzugsweise unerwünschten Schalldruckwellen externer Geräuschquellen. So kann vorzugsweise eine differentielle Messmethode realisiert werden, bei der bevorzugt störende Drücke und/oder Druckschwankungen herausgerechnet bzw. nicht gemessen werden und als gemessene Größe im Wesentlichen die aufgrund der absorbierten, modulierten Strahlung entstehenden Schalldruckwellen übrig bleiben.

Dabei kann der Schalldetektor als Struktur vorzugsweise das Proben- und das Referenzvolumen direkt voneinander (vorzugsweise im Wesentlichen druckdicht) trennen und eine schwingfähige Trennmembran und/oder ein Ventil zwischen diesen Bereichen umfassen als auch eine teilweise durchlässiges Ventil oder Membran darstellen, welche aber sensitiv auf Druckunterschiede zwischen beiden Volumina reagiert, weil sie beispielsweise nur einen verzögerten Druckausgleich zulässt und dadurch vom Druck vermittelte Kräfte vorzugsweise auf die Struktur wirken können.

Der Schalldetektor kann vorzugsweise ebenso komplett undurchlässig für das Gas oder die Gase beidseitig der Struktur sein, wobei die Membran bevorzug eine dünne, schwingungsfähige Schicht ist, die durch dynamische variierenden Druckunterschiede bei einer Schwingung beeinflusst werden kann.

Es kann ebenso bevorzugt sein, dass der Übergangsbereich für Gas in den Volumina vorhandenes Gas zumindest teilweise durchlässig ist, wobei der Schalldetektor im Übergangsbereich angeordnet ist, aber vorzugsweise kein räumlich komplett trennendes Element zwischen beiden Volumina darstellt, gleichzeitig jedoch insbesondere sensitiv auf Druckunterschiede zwischen den beiden Volumina reagiert und im Schwingungsverhalten beeinflusst werden kann.

Bevorzugt befindet sich im Probenvolumen und Referenzvolumen das gleiche Gas.

Es kann ebenso bevorzugt sein, dass im Probevolumen und im Referenzvolumen unterschiedliches Gas umfasst ist, wobei im Referenzvolumen ein Gas mit bekannten Eigenschaften vorliegt und im Probenvolumen ein zu analysierendes Gas vorliegt.

Durch die Verwendung zweier Volumina und mindestens eines Schalldruckdetektors kann vorteilhafterweise eine verbesserte Eliminierung von Fehlerquellen, z. B. unerwünschten Schallwellen erfolgen, weil diese auf beide Volumina wirken und der zwischen den Volumina angeordnete Schalldruckdetektor bevorzugt im Wesentlichen nur die durch die für die PAS relevanten von der IR-Strahlung hervorgerufenen Schalldruckwellen im Probenvolumen als Differenzsignal zwischen Probenvolumen und Referenzvolumen detektiert.

In einer bevorzugten Ausführungsform umfasst jedes der beiden Volumen mindestens einen Schalldruckdetektor, so dass von dem Schalldruckdetektor im Referenzvolumen bevorzugt nur unerwünschte, durch externe (Schall-) Quellen verursachte Druckschwankungen gemessen werden und im Probenvolumen, bei stattfindender Absorption der modulierten IR-Strahlung zusätzlich zu den unerwünschten Druckschwankungen die durch die Modulation verursachten Schalldruckwellen detektiert werden. In dieser Ausführungsform sind vorteilhafterweise bei einer (elektronischen) Weiterverarbeitung der Messsignale die unerwünschten Signale, insbesondere durch Differenzbildung, hinausrechenbar.

In einer weiteren bevorzugten Ausführungsform der Erfindung ist die Messeinheit des Schalldetektors eine optische Messeinheit, bevorzugt umfassend einen Photonenstrahler zur Erzeugung eines Photonenstrahles und einen Photodetektor, wobei der Photonenstrahler derart auf die schwingfähige Struktur ausgerichtet ist, dass mittels des Photodetektors die Schwingungseigenschaften der schwingfähigen Struktur, bevorzugt die Amplitude einer Schwingung der schwingfähigen Struktur, gemessen werden kann.

In dieser Ausführungsform ist der Photonenstrahler auf die schwingfähige Struktur ausgerichtet, dass bedeutet insbesondere, dass ein vom Photonenstrahler emittierter Licht- bzw. Photonenstrahl auf die schwingfähige Struktur ausgerichtet ist und dessen Strahlung im Wesentlichen oder teilweise von der Struktur reflektiert wird. Dafür können vorzugsweise das Spektrum der Emission des Photonenstrahlers und/oder die Oberfläche der Struktur, an der die Reflektion stattfindet, abgestimmt sein, so dass der Strahl im Wesentlichen oder mindestens teilweise reflektiert wird. Dabei sind vorzugsweise Photonenstrahler, Photodetektor und/oder die Struktur so zueinander ausgerichtet, dass der von der Struktur reflektierte Strahl im Wesentlichen oder teilweise in einer Detektionsoberfläche des Photonendetektors absorbiert und vom Detektor bevorzugt in ein mess- und/oder auslesbares elektrisches bzw. elektronisches Signal umgewandelt wird, welches Aussagen über die Schwingungseigenschaften der Struktur zulässt.

Es ist besonders bevorzugt, dass die optische Messeinheit weitere optische Elemente, wie z. B. einen Strahlteiler umfasst und der Photonenstrahler ein Laser ist, so dass die Schwingungseigenschaften der Struktur durch die optische Messeinheit über eine interferometrische Messung ausgelesen werden kann. Dabei wird insbesondere ein an der Struktur reflektierter Teilstrahl mit einem nicht an der Struktur reflektierten Teilstrahl überlagert, wobei beide Teilstrahlen im Wesentlichen oder teilweise zueinander kohärent sind und miteinander interferieren. Durch eine Messung der resultierenden konstruktiven bzw. destruktiven Interferenz der Teilstrahlen können bevorzugt unter Kenntnis der zurückgelegten Strecken der Teilstrahlen bei Reflexion an einer nicht schwingenden Struktur Aussagen über die relativen Weglängenunterschiede der Teilstrahlen und/oder die aktuelle Position der Struktur getroffen werden, wobei insbesondere bei einer Messung im zeitlichen Verlauf Aussagen über die Schwingungseigenschaften der Struktur getroffen werden können.

In einer weiteren bevorzugten Ausführungsform der Erfindung ist die Messeinheit des Schalldetektors eine elektrische Messeinheit, bevorzugt zur Messung Schwingungseigenschaften der schwingfähigen Struktur, insbesondere der Amplitude einer Schwingung der schwingfähigen Struktur, vor allem durch eine Impedanzmessung und/oder einer kapazitive Messung.

Eine Impedanz beschreibt insbesondere das Verhältnis von einer elektrischen Spannung zu einem elektrischen Strom, wobei insbesondere sinusförmige Spannungen und Ströme zugrunde gelegt werden und die Impedanz bevorzugt sowohl Informationen über das Verhältnis der Amplituden der Spannungen und Ströme sowie über deren Phasenverhältnis zueinander umfasst. Insbesondere bei einer Struktur, die mindestens ein piezoelektrisches Material umfasst, kann vorzugsweise an der Struktur, insbesondere an den Elektroden, die Impedanz vermessen werden, welche aufgrund der Verformung der Struktur und deren piezoelektrische Eigenschaften eine Abhängigkeit von den Schwingungseigenschaften aufweist. Dabei kann diese Impedanz vorzugsweise auch an den Elektroden abgelesen werden, an denen ein elektrisches Steuersignal zur Anregung der Schwingung anliegt. Hierbei überlagert sich vorzugsweise die Spannung des Steuersignals mit einer aufgrund der Verformung und/oder der Schwingungseigenschaften und deren Einfluss auf die Impedanz messbaren Spannung bzw. Stromes.

Diese Spannung und/oder dieser Strom weist vorzugsweise eine andere Amplitude und/oder eine Phasenverschiebung im Verhältnis zum Steuersignal auf, welche sich messen lässt, insbesondere durch Verwendung der Lock-In Technik unter Zuhilfenahme eines Lock-In-Verstärkers. Dabei kann am Eingang des Lock-In-Verstärkers bevorzugt ein zum elektrischen Steuersignal proportionales elektrisches Signal als Referenz anliegen und durch den Lock-In-Verstärker, bevorzugt unter Verwendung weiterer elektronischer Komponenten, die Impedanz der schwingungsfähigen Struktur im Vergleich zu dem Referenzsignal vermessen werden. Hierdurch können insbesondere Aussagen über das Phasenverhältnis der Impedanz zum Referenzsignal und/oder Amplitude der Impedanz getroffen werden, welche eine Bestimmung der Schwingungseigenschaften der Struktur ermöglicht.

Es kann ebenso bevorzugt sein, das elektrische Modulationssignal zur Modulation der IR-Strahlung als Referenzsignal am Eingang eines Lock-In-Verstärkers anzulegen, so dass nur Modulationen der Schwingungseigenschaften bei im Wesentlichen dieser Frequenz bei der Messung herausgefiltert werden.

Es kann ebenso bevorzugt sein, eine Impedanz an zusätzlichen Elektroden zu vermessen, an denen kein elektrisches Steuersignal gleichzeitig anliegt. Insbesondere kann dort aufgrund des direkten piezoelektrischen Effekts ein Strom und/oder eine Spannung vermessen werden, welche zu einer Vermessung der Schwingungseigenschaften der Struktur geeignet ist.

Durch Verwendung der Lock-In-Technologie kann eine besonders rauscharme Messung mit einem hohen Signal-zu-Rauschverhältnis realisiert werden.

Eine Messung der elektrischen Eigenschaften der Struktur, bevorzugt eines fließenden Stromes und/oder einer anliegenden Spannung und insbesondere einer Impedanz, welche bevorzugt an Elektroden der Struktur abgegriffen werden, kann vorzugsweise auch dann zur Vermessung der Schwingungseigenschaften verwendet werden, wenn die Schwingungsanregung der Struktur nicht auf Basis eines piezoelektrischen Effekts geschieht. Dabei kann die Struktur insbesondere ein piezoelektrisches und/oder piezoresistives Material umfassen, dessen aufgrund der Verformung durch die Schwingungseigenschaften sich ändernde elektrische Eigenschaften vermessen werden.

Eine elektrische Messeinheit kann vorzugsweise zu einer kapazitiven Messung der schwingfähigen Struktur verwendet werden. Eine kapazitive Messung umfasst insbesondere eine Messung einer elektrischen Kapazität. Vorzugsweise kann die Struktur für eine solche Messung mindestens eine Elektrode aufweisen, wobei z. B. eine Kapazität zwischen dieser Elektrode und einer nicht mit der Struktur mitschwingenden Elektrode, welche bevorzugt an dem Analysevolumen fest installiert vorliegt, gemessen wird. Dabei ändert sich insbesondere aufgrund eines von den Schwingungseigenschaften, insbesondere einer momentanen Auslenkung der Struktur ändernden Abstands zwischen den Elektroden deren Kapazität bzw. eine zwischen den Elektroden messbare Spannung und/oder eine Impedanz der der durch die Elektroden gebildeten Kondensators, welche z. B. durch Anlegen eines Wechselstroms und/oder einer Wechselspannung gemessen werden kann.

In einer weiteren bevorzugten Ausführungsform der Erfindung umfasst der modulierbare Infrarotemitter ein Heizelement, wobei das Heizelement ein Substrat umfasst, auf welchem mindestens teilweise eine erhitzbare Schicht aus einem leitfähigen Material aufgebracht ist, an welchem Kontakte für eine Strom- und/oder Spannungsquelle vorliegen, wobei das Substrat bevorzugt ausgewählt ist aus einer Gruppe umfassend Silizium, monokristallines Silizium, Polysilizium, Siliziumdioxid, Siliziumcarbid, Siliziumgermanium, Siliziumnitrid, Nitrid, Germanium, Kohlenstoff, Galliumarsenid, Galliumnitrid und/oder Indiumphosphid und/oder das leitfähige Material zur Bildung der erhitzbaren Schicht bevorzugt ausgewählt ist aus einer Gruppe umfassend Platin, Wolfram, (dotiertes) Zinnoxid, monokristallines Silizium, Polysilizium, Molybdän, Titan, Tantal, Titan-Wolfram Legierung, Metallsilizid, Aluminium, Graphit und/oder Kupfer.

Dabei umfasst das Heizelement eine erhitzbare Schicht aus einem leitfähigen Material, welches bei Durchfluss eines elektrischen Stroms joulesche Wärme produziert. Das Heizelement umfasst insbesondere ein Substrat, auf dem die erhitzbare Schicht vorliegt. Das Substrat bildet bevorzugt die Basis des Heizelements. Dabei kann das Substrat auch weitere Elemente des IR-Emitters, wie beispielsweise Grundelement und/oder Gehäuseelemente zumindest teilweise umfassen. Das Substrat kann vorteilhafterweise durch etablierte Prozessschritte, insbesondere aus der Halbleiter- und/oder Mikrosystemherstellung, geeignet geformt werden. Die vorstehend genannten Materialien sind in der Halbleiter- und/oder Mikrosystemherstellung besonders einfach und kostengünstig zu bearbeiten und eignen sich ebenfalls gut für eine Massenherstellung. Ebenso sind diese Materialien für ein Dotieren und/oder Beschichten besonders geeignet, um in bestimmten Bereichen die gewünschten elektrischen, thermischen und/oder Strahlungseigenschaften zu erzielen.

In einer weiteren bevorzugten Ausführungsform des modulierbaren Infrarot-Emitters ist das leitfähige Material zur Bildung der erhitzbaren Schicht ausgewählt aus der Gruppe umfassend Platin, Wolfram, (dotiertes) Zinnoxid, monokristallines Silizium, Polysilizium, Molybdän, Titan, Tantal, Titan-Wolfram Legierung, Metallsilizid, Aluminium, Graphit und/oder Kupfer. Diese Materialien weisen zum einen die gewünschten thermischen, elektrischen, mechanischen und/oder Strahlungseigenschaften auf und sind darüber hinaus besonders leicht und kostengünstig zu verarbeiten.

Das (Mikro-) Heizelement ist bevorzugt zumindest teilweise freistehend und erlaubt z. B. innerhalb des IR-Emitters thermische Dehnungen aufgrund von starken Temperaturänderungen sowie Translationsbewegungen. Teilweise freistehend bedeutet, dass es an den Grenzflächen zumindest teilweise nicht kraft- und/oder formschlüssig mit anderen Elementen des Emitters verbunden ist und daher einen Freiheitsgrad der Bewegung in eine im Wesentlichen zur Grenzfläche senkrechten Richtung aufweist.

In einer bevorzugten Ausführungsform der Erfindung ist die Steuereinrichtung konfiguriert zur Regulation der Temperatur des Heizelements in einem Bereich zwischen 50 °C und 1000 °C, bevorzugt zwischen 100 °C und 1000 °C.

Eine solche Steuereinrichtung ist bevorzugt in der Lage, dem Heizelement geeignete elektrische Leistungen zur Verfügung zu stellen. Insbesondere soll die Temperatur hinreichend genau einstellbar sein, konstant gehalten werden und/oder moduliert werden können. Dafür kann ein Regelmechanismus mit einer Feedbackschleife verwendet werden. Zur Messung der aktuellen Temperatur des Heizelements kann z. B. mindestens ein Temperatursensor an geeigneter Stelle des Elements integriert sein.

Es kann besonders bevorzugt sein, die Temperatur in dem genannten Bereich zur Modulierung der IR-Strahlung zu modulieren. Dabei wird die Temperatur bevorzugt zwischen einer maximalen Temperatur und einer minimalen Temperatur moduliert, wobei mindestens die maximale Temperatur innerhalb des o. g. Bereichs liegt.

In einem weiteren Aspekt betrifft die Erfindung ein Verfahren zur Analyse von Gas, umfassend

    a. Bereitstellung eines Photoakustischen Spektroskops zur Analyse von Gas gemäß einem der vorherigen Ansprüche

    b. Bestrahlung des Gases mit einer mit einer Modulationsfrequenz modulierten Infrarotstrahlung zur Erzeugung von Schalldruckwellen

    c. Anregung der schwingfähigen Struktur mit einer Anregungsfrequenz

    d. Messung der Schwingungseigenschaften der schwingfähigen Struktur, welche vom Schalldruck abhängt

    e. Bestimmung des Schalldruckes des Gases anhand der gemessenen Schwingungseigenschaften.

Der durchschnittliche Fachmann erkennt, dass technische Merkmale, Definitionen und Vorteile bevorzugter Ausführungsformen des erfindungsgemäßen photoakustischen Spektroskops auch für das erfindungsgemäße Verfahren gelten.

In einer bevorzugten Ausführungsform der Erfindung wird der zeitliche Verlauf der mittels der modulierten Infrarotstrahlung erzeugten Schalldruckwellen ermittelt. Insbesondere durch Messung einer Zeitreihe der Schwingungseigenschaften können die Schalldruckwellen im zeitlichen Verlauf gemessen werden, wodurch vorteilhafterweise weitere Erkenntnisse über das zu analysierende Gas gewonnen werden können, z. B. über das Relaxationsverhalten nach einer Anregung durch modulierte IR-Strahlung. Dabei können vorzugsweise nicht nur Schalldruckwellen innerhalb des Gases gemessen werden, sondern auch ein konstanter bzw. sich langsam ändernder Druck. Dadurch können vorzugsweise auch die Eigenschaften des Gases bei einem Einsetzen und/oder einem Abklingen von Schalldruckwellen gemessen werden, insbesondere ein Relaxationsverhalten des Gases.

## DETAILLIERTE BESCHREBUNG

Im Folgenden soll die Erfindung an Hand von Beispielen näher erläutert werden, ohne auf diese beschränkt zu sein.

Einfache Druckmessung eines Umgebungsgases mit einer schwingfähigen Struktur:

Beispielhaft soll im Folgenden die theoretischen Grundlagen für eine Druckmessung eines Umgebungsgases erläutert werden.

Im Kontext resonant schwingender Strukturen, insbesondere von MEMS Strukturen ist der Q-Faktor (Abgekürzt vom engl. *Quality factor*) eine wichtige Größe [1]. Der Q-Faktor (auch Gütefaktor genannt) ist vorzugsweise definiert als $2\pi$ mal das Verhältnis der in der schwingenden Struktur gespeicherten Energie zum Energieverlust während einer Schwingungsperiode. Der Energieverlust wird insbesondere durch die Dämpfung der Schwingung hervorgerufen. Die Dämpfung ist dabei bevorzugt sowohl auf interne Reibungsverluste innerhalb der Struktur zurückzuführen als auch externe Verluste, z. B. durch Stöße der schwingenden Struktur mit Gasmolekülen des Umgebungsgases, bevorzugt auch viskose Dämpfung genannt. Daher besteht vorzugsweise eine Wechselwirkung der schwingenden Struktur mit der Gasumgebung, insbesondere über die Druckverhältnisse der Gasumgebung, vor allem im zeitlichen Verlauf, womit vorteilhafterweise auch die Wechselwirkung mit Schalldruckwellen umfasst ist. Z. B. wird durch die viskose Dämpfung des Umgebungsgases bevorzugt aufgrund der Druckverhältnisse des Gases das dynamische Verhalten des mechanisch schwingenden Systems beeinflusst, bspw. durch eine Verschiebung der Resonanzfrequenz und/oder eine Änderung der Schwingungsamplitude. Für schwingende Systeme, wie z. B. die schwingende schwingungsfähige Struktur, welche vorzugsweise im Wesentlichen durch eine Differentialgleichung zweiter Ordnung beschrieben werden können, besteht bei vorzugsweise schwacher Dämpfung (vorzugsweise Dämpfung zwischen 0 und 1) des Systems folgende Abhängigkeit der Resonanz- oder Eigenfrequenz (vorzugsweise ohne Dämpfung) des Systems:

$$\omega_0 = (K/M)^{1/2},$$

wobei K bevorzugt die die schwingungsfähige Struktur beschreibende Federkonstante ist und M vorzugsweise die Masse der Struktur. Durch den Einfluss der Dämpfung auf das Schwingverhalten der Struktur verschiebt sich die tatsächliche Resonanzfrequenz mit Dämpfung $\omega_d$ vorzugsweise gegenüber $\omega_0$ wie folgt:

$$\omega_d = \omega_0 \, (1-\xi^2)^{1/2},$$

wobei $\xi$ das Dämpfungsverhältnis beschreibt.

Daher kann das Dämpfungsverhältnis vorteilhafterweise gemessen bzw. abgeschätzt werden durch die gemessenen Resonanzfrequenz $\omega_{n,meas}$ und den gemessenen Gütefaktor $Q_{meas}$:

$$\xi = C_n/(2m \, \omega_{n,meas}),$$

wobei hier bevorzugt m die Masse der Struktur ist und $C_n$ bevorzugt der Dämpfungskoeffizient, welcher bevorzugt wie folgt definiert ist:

$$C_n = m \, \omega_{n,meas} / Q_{meas}.$$

$Q_{meas}$ wird vorzugsweise gemessen durch Messung der Resonanzfrequenz $\omega_{n,meas}$ und durch die Halbwertsbreite der Resonanz $\Delta\omega$ und beträgt insbesondere $Q_{meas} = \omega_{n,meas}/\Delta\omega$, wobei die Halbwertsbreite vorzugsweise definiert ist als der Frequenzabstand zwischen den beiden Frequenzen, bei denen die Schwingungsamplitude $1/\sqrt{2}$ der maximalen Schwingungsamplitude (in Resonanz), bzw. bei denen die Schwingungsintensität die Hälfte der maximalen Schwingungsintensität (in Resonanz) beträgt. Dies gilt bevorzugt zumindest bei Drücken oberhalb eines Unterdrucks und/oder Vakuumdrucks, bevorzugt oberhalb 0,01 mbar, besonders bevorzugt oberhalb 0,1 mbar, stärker bevorzugt oberhalb 1 mbar, insbesondere oberhalb 10 mbar, wobei mbar vorzugsweise Millibar sind, d. h. bevorzugt $10^{-3}$ bar, wobei 1 bar insbesondere $10^5$ Pascal (Abk.: Pa) entspricht.

In diesen Druckbereichen besteht vorzugsweise ein messbarer und/oder berechenbarer Zusammenhang zwischen der Dämpfung der schwingungsfähigen Struktur und dem Druck des Umgebungsgases, der insbesondere von der Ausbildung der Schalldruckwellen abfängt. Somit lassen sich bevorzugt der Druck und insbesondere die Schalldruckwellen mittels einer schwingfähigen Struktur präzise vermessen.

## Herstellung eines piezoelektrischen Cantilevers:

Beispielhaft soll im Folgenden ein Herstellungsverfahren für einen piezoelektrischen Cantilever aus AIN beschrieben werden [1]. Hierzu wird vorzugsweise in einem ersten Schritt ein 450 $\mu$m dicker 4 "-p-dotierter Siliziumwafer (100) auf beiden Seiten in einer trockenen Atmosphäre bei 1.000 ° C zur Passivierung oxidiert. Die gebildete $SiO_2$-Schicht ist vorzugsweise etwa 130 nm dick, wobei das Siliziumsubstrat vorzugsweise einen niedrigen spezifischen Widerstand aufweist (<0,1 Ohm cm), und bildet eine untere Elektrode des Cantilvers. In einem zweiten Schritt wird vorzugsweise durch plasmaunterstützte chemische Gasphasenabscheidung (engl.: *plasma-enhanced chemical vapour deposition, PECVD*) eine 400 nm starke $Si_3N_4$-Schicht auf der Unterseite des Wafers abgeschieden, um als Maskenschicht für das KOH-Ätzen (KOH: *Kaliumhydroxid*) von Silizium zu dienen. Als nächstes werden bevorzugt die $SiO_2$ - und $Si_3N_4$ - Schichten von oben entfernt, um sowohl die untere Elektrode als auch den aufgehängten Balken bzw. Cantilever freizulegen. Ebenso werden diese Schichten von der Unterseite entfernt, wo der aufgehängte Balken vorzugsweise unter Verwendung von Fluorsäure (HF) platziert werden soll (Schritt 3). In einem vierten Schritt wird bevorzugt ein 1.000 nm dicker AIN-Film in einer Sputteranlage (z. B. Von Ardenne) reaktiv aus einem Aluminium (Al) -Target in einer reinen Stickstoffatmosphäre abgeschieden. Dabei ist das Substrat vorzugsweise nominell unbeheizt. Der Umgebungsdruck wird dabei vorzugsweise auf etwa 4 $\times$ $10^{-3}$ mbar eingestellt, um eine gute c-orientierte AIN-Dünnschicht mit einem effektiven $d_{33}$ = 3 pm/V zu erreichen. Unter diesen Abscheidungsbedingungen beträgt die Sputterrate bevorzugt etwa 20 nm/min bei 1.000 W. Ein herkömmlicher Photoresist (AZ1518) wird dabei bevorzugt als Maske zum nasschemischen Entfernen von AIN aus dem unteren Elektrodenbereich und aus dem Bereich der Siliziummembran verwendet, welche später vorzugsweise an geeigneter Stelle durchgeätzt wird, um die einseitig aufgehängte Struktur des Cantilevers herzustellen (Schritt 5). Mit den genannten Parametern beträgt die AIN-Ätzrate vorzugsweise etwa 10 nm s-'. In einem sechsten Schritt wird bevorzugt durch Sputtern und anschließendes Strukturieren einer etwa 500 nm dicken Goldschicht (Au) in Königswasser (vorzugsweise konzentrierte Salzsäure (HCl) und konzentrierte Salpetersäure (HNO 3) im Verhältnis 3 zu 1) eine obere Elektrode und eine Kontaktstelle für den als untere Elektrode dienenden Siliziumkörper gebildet. Eine dünne Schicht aus Chrom (Cr) (Dicke vorzugsweise etwa 20 nm) wird bevorzugt als Adhäsionsschicht zwischen AIN und Au verwendet, wobei ein herkömmliches Cr-Ätzmittel bevorzugt zum Strukturieren verwendet wurde. Nach Beendigung des Strukturierens der oberen Elektrode wird bevorzugt 38%iges Kaliumhydroxid (KOH) bei 85 °C verwendet, um das Substrat in diesen Bereichen mit einer Restdicke von 20 $\mu$m zu strukturieren (Schritt 7). Für die Herstellung der aufgehängten Strukturen wird vorzugsweise eine Freilegung an der Vorderseite des AIN-Aktuators des Cantilevers auf Siliziumbasis für das Freischwingen durch ein Bosch-Verfahren durchgeführt (Schritt 8).

Kurzbeschreibung der Abbildungen

Abb. 1    Analysevolumen umfassend eine Probekammer und eine Referenzkammer sowie einen Schalldruckdetektor mit einer schwingfähigen Struktur im Verbindungskanal zwischen beiden Kammern.

Abb. 2    Zeitlicher Verlauf des Drucks einer Schalldruckwelle (oben) sowie einer Schwingungsamplitude oder Intensität, einmal ohne den Dämpfungseinfluss einer Schalldruckwelle (Mitte) und einmal mit dem Einfluss der Schalldruckwelle (unten).

Abb. 3    Die Beeinflussung eines Umgebungsdrucks auf die Schwingungseigenschaften der schwingfähigen Struktur, insbesondere auf die Resonanzfrequenz.

Ausführliche Beschreibung der Abbildungen

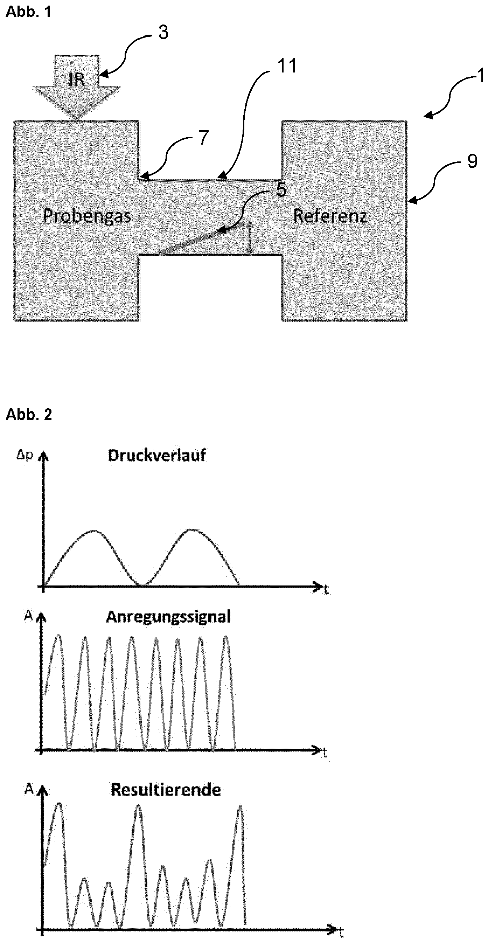

Abbildung 1 zeigt das Analysevolumen **1** umfassend eine Probekammer **7** und eine Referenzkammer **9** sowie einen Schalldruckdetektor mit einer schwingfähigen Struktur **5** im Verbindungskanal **11** zwischen beiden Kammern. In diesem Ausführungsbeispiel enthalten beide Kammern das gleiche zu analysierende Gas, wobei nur die Probenkammer einer modulierten IR-Strahlung ausgesetzt **3** wird. Die schwingfähige Struktur **5**, hier ein Biegebalken bzw. Cantilever im Verbindungskanal **11** zwischen beiden Kammern ist vom Aktuator (nicht gezeigt) zu einer aktiven Schwingung angeregt und die Messeinheit (nicht gezeigt) misst die Schwingungseigenschaften der schwingfähigen Struktur, z. B. Schwingungsamplitude, Schwingungsfrequenz, Phase der Schwingung gegenüber der Anregung und/oder Resonanzfrequenz der schwingfähigen Struktur **5**. Diese Schwingungseigenschaften hängen von der Ausbildung der Schalldruckwellen ab, die die schwingfähige Struktur **5** erfährt. Dabei können diese auch Schalldruckwellen von unerwünschten Schallquellen neben den Schalldruckwellen aufgrund einer Absorption der modulierten IR-Strahlung **3** des zu analysierenden Gases in der Probekammer **7** enthalten. Da vorzugsweise die unerwünschten Schalldruckwellen sowohl Referenzkammer **9** als auch Probekammer erreichen, wirken diese bevorzugt beidseitig in etwa im gleichen Maße auf den Cantilever, wobei die Schalldruckwellen der PAS aus der Probekammer **7** nur aus der Richtung dieser Probekammer **7** auf die schwingfähige Struktur **5** wirken und daher von dieser im Wesentlichen ohne eine Messung der unerwünschten Schalldruckwellen gemessen werden können.

Abbildung 2 zeigt in der oberen Teilabbildung einen beispielhaften zeitlichen Verlauf eines zu vermessenden Drucks einer Schalldruckwelle aufgrund einer PAS-Anregung von Gasmolekülen. In der mittleren Teilabbildung werden dabei die Schwingungseigenschaften der durch den Aktuator angeregten schwingfähigen Struktur **5** ohne den äußeren Einfluss aufgrund der Schalldruckwelle gezeigt. Dabei ist insbesondere die Schwingungsamplitude bzw. die Schwingungsintensität im zeitlichen Verlauf eingetragen, deren Periodizität jedoch auch Rückschlüsse auf die Schwingungsfrequenz zulässt. Die unterste Teilabbildung zeigt die Resultierende bei einer Wechselwirkung der Schalldruckwellen der oberen Teilabbildung mit einer Schwingung der schwingfähigen Struktur **5** aus der mittleren Teilabbildung. Die Darstellung zeigt schematisch die Beeinflussung der Schwingungseigenschaften der schwingfähigen Struktur **5** durch die Schalldruckwellen, welche durch Messung der Schwingungseigenschaften direkte Rückschlüsse auf die Ausbildung der Schalldruckwellen und somit auf die Zusammensetzung des Gases im Probenvolumen gemäß Abbildung 1 zulässt. Insbesondere ist eine Beeinflussung der Schwingungsamplitude bzw. Schwingungsintensität der schwingfähigen Struktur **5** zu erkennen, insbesondere durch Modulation der Einhüllenden der Schwingung,.

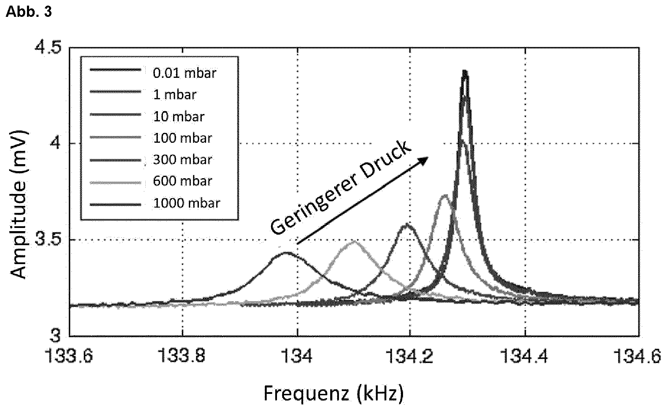

Abbildung 3 zeigt die gemessene Beeinflussung eines Umgebungsdrucks auf die Schwingungseigenschaften der schwingfähigen Struktur **5**, insbesondere auf die Resonanzfrequenz [1] der schwingfähigen Struktur und der jeweiligen Schwingungsamplitude. Bei dieser Messung wurde der Druck statistisch variiert und bei verschiedenen statischen Drücken die Resonanzfrequenz und deren Schwingungsamplitude gemessen. Man sieht insbesondere bei Drücken im Bereich des Atmosphärendrucks eine starke Abhängigkeit der Resonanzfrequenz von dem Umgebungsdruck der schwingfähigen Struktur **5**, aufgrund einer Dämpfung der Schwingung durch Stöße der Struktur **5** mit den Gasmolekülen der Umgebung. Diese Messung bei statischen Drücken lässt sich bei einer genügend hohen Samplingrate bzw. Abtastrate auch für dynamische Druckvariationen aufgrund von Schalldruckwellen anwenden, welche von einer Absorption einer modulierte IR-Strahlung durch die Gasmoleküle hervorgerufen wird. Bei niedrigen Drücken ab etwa 10 mbar zeigt sich nur noch ein geringerer Einfluss des Umgebungsdrucks auf die Schwingungseigenschaften der schwingfähigen Struktur **5**. Bei solch niedrigen Drücken überwiegt in der Regel der Einfluss der intrinsischen Dämpfung der Struktur **5** gegenüber einer externen Dämpfung durch den Druck des umgebenden Gases. Jedoch ließen sich bevorzugt auch bei diesen niedrigen Drücken Aussagen aufgrund einer Messung der Schwingungseigenschaften treffen, wenn z. B. die Auflösung der Messung der Frequenz und der Schwingungsamplitude bzw. Schwingungsintensität erhöht würde.

## BEZUGSZEICHENLISTE

1  Analysevolumen
3  Modulierte Infrarotstrahlung
5  Schwingfähige Struktur
7  Probekammer
9  Referenzkammer
11  Verbindungskanal

## LITERATURVERZEICHNIS

[1] Abdallah Ababneh, A. N. Al-Omari, A. M. K. Dagamseh, H. C. Qiu, D. Feili, V. Ruiz-Diez, T. Manzaneque, J. Hernando, J. L. Sänchez-Rojas, A. Bittner. U. Schmid. , H. Seidel: Electrical characterization of micromachined AIN resonators at various back pressures, Microsyst Technol 20: 663-670, 2014.

[2] G Pfusterschmied, M. Kucera, E. Wistrela, T. Manzaneque, V. Ruiz-Diez, J. L. Sánchez-Rojas, A. Bittner and U. Schmid et al: Temperature dependent performance of piezoelectric MEMS resonators for viscosity and density determination of liquids, J. Micromech. Microeng. 25 105014, 2015.

## Patentansprüche

1. Photoakustisches Spektroskop zur Analyse von Gas, umfassend

    - einen modulierbaren Infrarot-Emitter,
    - ein mit Gas befüllbares Analysevolumen (1) und
    - einen Schalldruckdetektor,

    wobei der Infrarot-Emitter, das Analysevolumen (1) und der Schalldetektor derart angeordnet vorliegen, dass die von dem Infrarot-Emitter modulierbar emittierbare Infrarotstrahlung Gas im Analysevolumen zur Ausbildung von Schalldruckwellen anregen kann, welche mit Hilfe des Schalldruckdetektors messbar sind, wobei der Schalldruckdetektor eine schwingfähige Struktur (5), einen Aktuator und eine Messeinheit umfasst, wobei der Aktuator konfiguriert ist für eine aktive Schwingungsanregung der schwingfähigen Struktur (5) und die Messeinheit konfiguriert ist zur Messung der Schwingungseigenschaften der schwingfähigen Struktur (5), welche von der Ausbildung der Schalldruckwellen abhängt, **dadurch gekennzeichnet, dass** die Modulationsfrequenz des Infrarotemitters zwischen 1 Hz und 200 Hz beträgt, während die Anregungsfrequenz der schwingfähigen Struktur (5) zwischen 1 kHz und 200 kHz beträgt.

2. Photoakustisches Spektroskop gemäß dem vorherigen Anspruch **dadurch gekennzeichnet, dass** das Spektroskop eine Steuereinheit umfasst, welche konfiguriert ist die schwingfähige Struktur (5) mit einer Anregungsfrequenz zur Schwingung anzuregen und den modulierbaren Infrarot-Emitter derart zu steuern, dass dieser mit einer Modulationsfrequenz modulierte Infrarotstrahlung (3) emittiert, wobei die Modulationsfrequenz der Infrarotemitters um einen Faktor 5, bevorzugt 10 oder mehr kleiner ist als die Anregungsfrequenz der schwingfähigen Struktur (5).

3. Photoakustisches Spektroskop gemäß einem der vorherigen Ansprüche **dadurch gekennzeichnet, dass** die Anregungsfrequenz der schwingfähigen Struktur (5) einer Resonanzfrequenz der schwingfähigen Struktur (5) entspricht.

4. Photoakustisches Spektroskop gemäß einem der vorherigen Ansprüche **dadurch gekennzeichnet, dass** das Spektroskop einen Array von Schalldruckdetektoren umfasst.

5. Photoakustisches Spektroskop gemäß einem der vorherigen Ansprüche **dadurch gekennzeichnet, dass** der Aktuator ein MEMS-Aktuator ist, bevorzugt ausgewählt aus der Gruppe umfassend elektrostatischer Aktuator, piezoelektrischerAktuator, elektromagnetischer Aktuator und/oder thermischer Aktuator

6. Photoakustisches Spektroskop gemäß einem der vorherigen Ansprüche **dadurch gekennzeichnet, dass** die schwingungsfähige Struktur (5) einen Biegebalken, ein Ventil und/oder eine Membran umfasst.

7. Photoakustisches Spektroskop gemäß einem der vorherigen Ansprüche **dadurch gekennzeichnet, dass** der Schalldruckdetektor einen piezoelektrischen Balken umfasst, welcher bevorzugt als Freischwinger im Analysevolumen angeordnet vorliegt, wobei der piezoelektrische Biegebalken bevorzugt zwei Elektroden und eine piezoelektrische Zwischenschicht aus einem Material ausgewählt aus der Gruppe enthaltend Blei-Zirkonat-Titanat (PZT), Aluminiumnitrid (AIN) oder Zinkoxid (ZnO) aufweist.

8. Photoakustisches Spektroskop gemäß einem der vorherigen Ansprüche
**dadurch gekennzeichnet, dass**

das Analysevolumen (1) eine Probekammer (7) und eine Referenzkammer (9) umfasst, wobei der Infrarotemitter derart angeordnet vorliegt, dass dieser die Probekammer (7) und nicht die Referenzkammer (9) bestrahlt und wobei zwischen der Probekammer (7) und Referenzkammer (9) einen Verbindungskanal (11) vorliegt, in welchem sich die schwingfähige Struktur (5) befindet.

9. Photoakustisches Spektroskop gemäß einem der vorherigen Ansprüche
**dadurch gekennzeichnet, dass**

die Messeinheit des Schalldetektors eine optische Messeinheit ist, bevorzugt umfassend einen Photonenstrahler zur Erzeugung eines Photonenstrahles und einen Photodetektor, wobei der Photonenstrahler derart auf die schwingfähige Struktur (5) ausgerichtet ist, dass mittels des Photodetektors die Schwingungseigenschaften der schwingfähigen Struktur (5) gemessen werden können.

10. Photoakustisches Spektroskop gemäß einem der vorherigen Ansprüche
**dadurch gekennzeichnet, dass**

die Messeinheit des Schalldetektors eine elektrische Messeinheit ist, bevorzugt zur Messung der Schwingungseigenschaften der schwingfähigen Struktur (5) durch eine Impedanzmessung und/oder einer kapazitiven Messung.

11. Photoakustisches Spektroskop gemäß einem der vorherigen Ansprüche
**dadurch gekennzeichnet, dass**

der modulierbare Infrarotemitter ein Heizelement umfasst
wobei bevorzugt das Heizelement ein Substrat umfasst, auf welchem mindestens teilweise eine erhitzbare Schicht aus einem leitfähigen Material aufgebracht ist, an welchem Kontakte für eine Strom- und/oder Spannungsquelle vorliegen.

12. Photoakustisches Spektroskop gemäß dem vorherigen Anspruch
**dadurch gekennzeichnet, dass** das Substrat ausgewählt ist aus einer Gruppe umfassend Silizium, monokristallines Silizium, Polysilizium, Siliziumdioxid, Siliziumcarbid, Siliziumgermanium, Siliziumnitrid, Nitrid, Germanium, Kohlenstoff, Galliumarsenid, Galliumnitrid und/oder Indiumphosphid und/oder das leitfähige Material zur Bildung der erhitzbaren Schicht bevorzugt ausgewählt ist aus einer Gruppe umfassend Platin, Wolfram, (dotiertes) Zinnoxid, monokristallines Silizium, Polysilizium, Molybdän, Titan, Tantal, Titan-Wolfram Legierung, Metallsilizid, Aluminium, Graphit und/oder Kupfer.

13. Photoakustisches Spektroskop gemäß einem der vorherigen Ansprüche
**dadurch gekennzeichnet, dass**

die Steuereinrichtung konfiguriert ist zur Regulation der Temperatur des Heizelements in einem Bereich zwischen 50 °C und 1000 °C, bevorzugt zwischen 100 °C und 1000 °C.

14. Verfahren zur Analyse von Gas, umfassend

a. Bereitstellung eines Photoakustischen Spektroskops zur Analyse von Gas gemäß einem der vorherigen Ansprüche
b. Bestrahlung des Gases mit einer mit einer Modulationsfrequenz modulierten Infrarotstrahlung (3) zur Erzeugung von Schalldruckwellen
c. Anregung der schwingfähigen Struktur (5) mit einer Anregungsfrequenz
d. Messung der Schwingungseigenschaften der schwingfähigen Struktur (5), welche vom Schalldruck abhängt
e. Bestimmung des Schalldruckes des Gases anhand der gemessenen Schwingungseigenschaften

15. Verfahren zur Analyse von Gas, gemäß dem vorherigen Anspruch
**dadurch gekennzeichnet, dass**

der zeitliche Verlauf der mittels der modulierten Infrarotstrahlung (3) erzeugten Schalldruckwellen ermittelt wird.

**Claims**

1. A photoacoustic spectroscope for analyzing gas, comprising

- a modulatable infrared emitter,
- an analysis volume (1) that can be filled with gas, and
- a sound pressure detector,
wherein the infrared emitter, the analysis volume (1), and the sound pressure detector are arranged such that the infrared radiation modulatably emittable from the infrared emitter can excite gas in the analysis volume to form sound pressure waves which can be measured using the sound pressure detector,
wherein the sound pressure detector comprises a structure (5) capable of vibrating, an actuator, and a measuring unit, wherein the actuator is configured to actively excite vibration of the structure (5) capable of vibrating and the measuring unit is configured for measuring the vibration properties of the structure (5) capable of vibrating, which measurement depends on the formation of the sound pressure waves,
**characterized in that** the modulation frequency of the infrared emitter is preferably between 1 Hz and 200 Hz, while the excitation frequency of the structure (5) capable of vibrating is between 1 kHz and 200 kHz.

2. The photoacoustic spectroscope according to the preceding claim,
**characterized in that**
the spectroscope comprises a control unit which is configured to excite the structure (5) capable of vibrating to vibrate using an excitation frequency and to control the modulatable infrared emitter in such a manner that it emits infrared radiation (3) modulated with a modulation frequency, wherein the modulation frequency of the infrared emitter is smaller than the excitation frequency of the structure (5) capable of vibrating by a factor of 5, preferably 10 or more.

3. The photoacoustic spectroscope according to any one of the preceding claims,
**characterized in that**
the excitation frequency of the structure (5) capable of vibrating corresponds to a resonance frequency of the structure (5) capable of vibrating.

4. The photoacoustic spectroscope according to any one of the preceding claims,
**characterized in that**
the spectroscope comprises an array of sound pressure detectors.

5. The photoacoustic spectroscope according to any one of the preceding claims,
**characterized in that**
the actuator is a MEMS actuator, preferably selected from the group comprising electrostatic actuators, piezoelectric actuators, electromagnetic actuators, and/or thermal actuators.

6. The photoacoustic spectroscope according to any one of the preceding claims,
**characterized in that**
the structure (5) capable of vibrating comprises a bending beam, a valve, and/or a membrane.

7. The photoacoustic spectroscope according to any one of the preceding claims,
**characterized in that**
the sound pressure detector comprises a piezoelectric beam which is preferably arranged as a cantilever in the analysis volume, wherein the piezoelectric bending beam preferably comprises two electrodes and a piezoelectric intermediate layer made of a material selected from the group containing lead-zirconate-titanate (PZT), aluminum nitride (AIN), or zinc oxide (ZnO).

8. The photoacoustic spectroscope according to any one of the preceding claims,
**characterized in that**
the analysis volume (1) comprises a sample chamber (7) and a reference chamber (9), wherein the infrared emitter is arranged in such a manner that it irradiates the sample chamber (7) and not the reference chamber (9), and wherein a connection channel (11) is present between the sample chamber (7) and reference chamber (9) in which channel the structure (5) capable of vibrating is located.

9. The photoacoustic spectroscope according to any one of the preceding claims,
**characterized in that**
the measuring unit of the sound detector is an optical measuring unit, preferably comprising a photon emitter for generating a photon beam and a photodetector, wherein the photon emitter is aligned with the structure (5) capable of vibrating in such a manner that the vibration properties of the structure (5) capable of vibrating can be measured by means of the photodetector.

10. The photoacoustic spectroscope according to any one of the preceding claims,
**characterized in that**
the measuring unit of the sound detector is an electrical measuring unit, preferably for measuring the vibration characteristics of the structure (5) capable of vibrating by an impedance measurement and/or a capacitive measurement.

11. The photoacoustic spectroscope according to any one of the preceding claims,
**characterized in that**
the modulatable infrared emitter comprises a heating element, wherein preferably the heating element comprises a substrate onto which at least partially a heatable layer of a conductive material is applied, which substrate comprises contacts for a current and/or voltage source.

12. The photoacoustic spectroscope according to the preceding claim,
**characterized in that** the substrate is selected from a group comprising silicon, monocrystalline silicon, polysilicon, silicon dioxide, silicon carbide, silicon germanium, silicon nitride, nitride, germanium, carbon, gallium arsenide, gallium nitride, and/or indium phosphide and/or the conductive material for forming the heatable layer is preferably selected from a group comprising platinum, tungsten, (doped) tin oxide, monocrystalline silicon, polysilicon, molybdenum, titanium, tantalum, titanium-tungsten alloy, metal silicide, aluminum, graphite, and/or copper.

**13.** The photoacoustic spectroscope according to any one of the preceding claims,
**characterized in that**
the control device is configured to regulate the temperature of the heating element in a range between 50°C and 1000°C, preferably between 100°C and 1000°C.

**14.** A method for analyzing gas, comprising

a. Provision of a photoacoustic spectroscope for analyzing gas according to any one of the preceding claims
b. Irradiation of the gas with infrared radiation (3) modulated at a modulation frequency to generate sound pressure waves
c. Excitation of the structure (5) capable of vibrating with an excitation frequency
d. Measurement of the vibration properties of the structure (5) capable of vibrating, which depends on the sound pressure
e. Determination of the sound pressure of the gas based on the measured vibration properties.

**15.** The method for analyzing gas according to the preceding claim,
**characterized in that**
the time profile of the sound pressure waves generated by means of the modulated infrared radiation (3) is determined.


**Revendications**

**1.** Spectroscope photoacoustique pour l'analyse d'un gaz, comprenant

- un émetteur infrarouge modulable,
- un volume d'analyse (1) pouvant être rempli de gaz et
- un détecteur de pression sonore,

dans lequel l'émetteur infrarouge, le volume d'analyse (1) et le détecteur sonore sont agencés de sorte que le rayonnement infrarouge qui peut être émis par l'émetteur infrarouge de manière modulable peut exciter des gaz dans le volume d'analyse pour former des ondes de pression sonore, qui peuvent être mesurées à l'aide du détecteur de pression sonore, dans lequel le détecteur de pression sonore comprend une structure vibrante (5), un actionneur et une unité de mesure, dans lequel l'actionneur est configuré pour une excitation vibratoire active de la structure vibrante (5) et l'unité de mesure est configurée pour mesurer les propriétés vibratoires de la structure vibrante (5), dont dépend la formation des ondes de pression acoustique, **caractérisé en ce que** la fréquence de modulation de l'émetteur infrarouge est compris entre 1 Hz et 200 Hz, tandis que la fréquence d'excitation de la structure vibrante (5) est comprise entre 1 kHz et 200 kHz.

**2.** Spectroscope photoacoustique selon la revendication précédente
**caractérisé en ce que**
le spectroscope comprend une unité de commande qui est configurée pour exciter la structure vibrante (5) avec une fréquence d'excitation pour la vibration et pour commander l'émetteur infrarouge modulable de sorte qu'il émette un rayonnement infrarouge (3) modulé avec une fréquence de modulation, dans lequel la fréquence de modulation de l'émetteur infrarouge est inférieure d'un coefficient 5, de préférence 10 ou plus à la fréquence d'excitation de la structure vibrante (5).

**3.** Spectroscope photoacoustique selon l'une des revendications précédentes
**caractérisé en ce que**
la fréquence d'excitation de la structure vibrante (5) correspond à une fréquence de résonance de la structure vibrante (5).

**4.** Spectroscope photoacoustique selon l'une des revendications précédentes
**caractérisé en ce que**
le spectroscope comprend un réseau de détecteurs de pression sonore.

**5.** Spectroscope photoacoustique selon l'une des revendications précédentes
**caractérisé en ce que**
l'actionneur est un actionneur MEMS, de préférence choisi dans le groupe comprenant un actionneur électrostatique, un actionneur piézoélectrique, un actionneur électromagnétique et/ou un actionneur thermique.

**6.** Spectroscope photoacoustique selon l'une des revendications précédentes
**caractérisé en ce que**
la structure vibrante (5) comprend une poutre de flexion, un clapet et/ou une membrane.

**7.** Spectroscope photoacoustique selon l'une des revendications précédentes
**caractérisé en ce que**
le détecteur de pression sonore comprend une poutre piézoélectrique, qui est de préférence disposée en porte-à-faux dans le volume d'analyse, dans lequel la poutre de flexion piézoélectrique a de préférence deux électrodes et une couche intermédiaire piézoélectrique en un matériau choisi dans le groupe contenant le zirconate titanate de plomb (PZT), le nitrure d'aluminium (AlN) ou l'oxyde de zinc (ZnO).

8. Spectroscope photoacoustique selon l'une des revendications précédentes **caractérisé en ce que** le volume d'analyse (1) comprend une chambre d'échantillon (7) et une chambre de référence (9), dans lequel l'émetteur infrarouge est disposé de sorte qu'il irradie la chambre d'échantillon (7) et non la chambre de référence (9) et il existe un canal de liaison (11) dans lequel se trouve la structure vibrante (5), entre la chambre d'échantillon (7) et la chambre de référence (9).

9. Spectroscope photoacoustique selon l'une des revendications précédentes **caractérisé en ce que** l'unité de mesure du détecteur sonore est une unité de mesure optique, comprenant de préférence un émetteur de photons pour générer un faisceau de photons et un photodétecteur, dans lequel l'émetteur de photons est aligné avec la structure vibrante (5) de sorte que les propriétés vibratoires de la structure vibrante (5) peuvent être mesurées à l'aide du photodétecteur.

10. Spectroscope photoacoustique selon l'une des revendications précédentes **caractérisé en ce que** l'unité de mesure du détecteur sonore est une unité de mesure électrique, de préférence pour mesurer les propriétés vibratoires de la structure vibrante (5) par une mesure d'impédance et/ou une mesure capacitive.

11. Spectroscope photoacoustique selon l'une des revendications précédentes **caractérisé en ce que** l'émetteur infrarouge modulable comprend un élément chauffant dans lequel l'élément chauffant comprend de préférence un substrat sur lequel est appliquée au moins partiellement une couche chauffante en un matériau conducteur, sur lequel se trouvent des contacts pour une source de courant et/ou de tension.

12. Spectroscope photoacoustique selon la revendication précédente **caractérisé en ce que** le substrat est choisi dans un groupe comprenant le silicium, le silicium monocristallin, le polysilicium, le dioxyde de silicium, le carbure de silicium, le silicium germanium, le nitrure de silicium, le nitrure, le germanium, le carbone, l'arséniure de gallium, le nitrure de gallium et/ou le phosphure d'indium et/ou le matériau conducteur pour former la couche chauffante est de préférence choisi dans un groupe comprenant le platine, le tungstène, l'oxyde d'étain (dopé), le silicium monocristallin, le polysilicium, le molybdène, le titane, le tantale, l'alliage titane-tungstène, le siliciure métallique, l'aluminium, le graphite et/ou le cuivre.

13. Spectroscope photoacoustique selon l'une des revendications précédentes **caractérisé en ce que** le dispositif de commande est configuré pour réguler la température de l'élément chauffant dans une plage comprise entre 50°C et 1000°C, de préférence entre 100°C et 1000°C.

14. Procédé d'analyse de gaz, comprenant

    a. la fourniture d'un spectroscope photoacoustique pour l'analyse d'un gaz selon l'une des revendications précédentes
    b. l'irradiation du gaz avec un rayonnement infrarouge (3) modulé avec une fréquence de modulation pour générer des ondes de pression sonore
    c. l'excitation de la structure vibrante (5) avec une fréquence d'excitation
    d. la mesure des propriétés vibratoires de la structure vibrante (5), qui dépendent de la pression sonore
    e. la détermination de la pression sonore du gaz sur la base des propriétés vibratoires mesurées.

15. Procédé d'analyse de gaz selon la revendication précédente, **caractérisé en ce que** l'évolution dans le temps des ondes de pression sonore générées au moyen du rayonnement infrarouge modulé (3) est déterminée.

**Abb. 1**

**Abb. 2**

**Abb. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2012151994 A1
- US 2019017966 A1
- US 2011072886 A1
- EP 2543987 A1

**In der Beschreibung aufgeführte Nicht-Patentliteratur**

- **ABDALLAH ABABNEH ; A. N. AL-OMARI ; A. M. K. DAGAMSEH ; H. C. QIU ; D. FEILI ; V. RUIZ-DIEZ ; T. MANZANEQUE ; J. HERNANDO ; J. L. SÄNCHEZ-ROJAS ; A. BITTNER.** Electrical characterization of micromachined AlN resonators at various back pressures. *Microsyst Technol,* 2014, vol. 20, 663-670

- **G PFUSTERSCHMIED ; M. KUCERA ; E. WISTRELA ; T. MANZANEQUE ; V. RUIZ-DIEZ ; J. L. SÁNCHEZ-ROJAS ; A. BITTNER ; U. SCHMID et al.** Temperature dependent performance of piezoelectric MEMS resonators for viscosity and density determination of liquids. *J. Micromech. Microeng.,* 2015, vol. 25, 105014